# EUROPEAN PATENT SPECIFICATION

(11) **EP 4 043 142 B1**
(45) Date of publication and mention of the grant of the patent: **07.08.2024**
(21) Application number: 21156821.7
(22) Date of filing: 12.02.2021
(51) Int. Cl.: B23K 26/03, B23K 26/082, B23K 26/352, B23K 26/362, G03F 7/20, B23K 37/02, B23K 101/42, B23K 103/04, B23K 103/00

(54) **METHOD FOR BATCH PROCESSING OF 3D OBJECTS USING LASER TREATMENT AND A SYSTEM IMPLEMENTING THE METHOD**
VERFAHREN ZUR STAPELVERARBEITUNG VON 3D-OBJEKTEN MITTELS LASERBEHANDLUNG UND SYSTEM ZUR DURCHFÜHRUNG DES VERFAHRENS
PROCÉDÉ DE TRAITEMENT PAR LOTS D'OBJETS EN 3D À L'AIDE DE TRAITEMENT LASER ET SYSTÈME METTANT EN OEUVRE LE PROCÉDÉ

(43) Date of publication of application: 17.08.2022
(73) Proprietor: Valstybinis Moksliniu Tyrimu Institutas Fiziniu Ir Technologijos Mokslu Centras, 02300 Vilnius (LT)
(72) Inventor: RACIUKAITIS, Gediminas, 14195 Vilniaus raj. (LT); RATAUTAS, Karolis, 11318 Vilnius (LT); VOSYLIUS, Vytautas, 04107 Vilnius (LT)
(74) Representative: Draugeliene, Virgina Adolfina

(56) References cited:
- WO-A1-2018/215292
- US-A1- 2006 278 613
- US-B2- 10 429 742
- RATAUTAS KAROLIS ET AL: "Laser Assisted Selective Metallization of Polymers", 2018 13TH INTERNATIONAL CONGRESS MOLDED INTERCONNECT DEVICES (MID), IEEE, 25 September 2018 (2018-09-25), pages 1 - 3, XP033441689, DOI: 10.1109/ICMID.2018.8526970

## Description

### Technical field to which invention relates

The invention relates to the field of laser microfabrication and provides a method and a multi-stage laser processing device for laser treatment. More particularly, the disclosure relates to laser treatment the batches of identical complex-shaped 3D objects.

### Relevant prior art

The current invention deals with 3D laser processing comprising multi-stage positioning system; tilting the laser beam to vary incident angle with the surface of a 3D object; rotating platform for loading and simultaneously orientation of multiple 3D objects during the laser treatment procedure. Various aspects of the invention are reflected in state-of-the-art solutions.

There are known methods for laser treatment of 3D objects and laser processing machines with multiple stages to position a focused laser beam relative to the object surface.

The patent application WO2017/017054A1 (2015-07-29) discloses a method and system for 3D laser processing comprising a robot and a galvoscanner and a camera attached to the robot arm. Such a system has high flexibility in the processing of 3D freeform objects. However, the precision and positioning speed of robotic arms are limited. Moreover, such an approach does not provide any benefits in laser processing batches of identical 3D objects.

One of the embodiments of the utility model in CN208391288U (2019-01-18) describes 3D dynamic galvoscanner fixed on an XYZ gantry system with rotary and swing axes on the Z-stage for the galvoscanner tilting. Such implementation could benefit at 3D processing of objects with large dimensions, but its application for batch processing on identical objects does not provide any advantages as moving mass of the gantry system is high, leading to a limitation in positioning speed between process areas.

The patent application CN109623161A (2019-04-16) describes a multi-axes laser processing method and device where an object to process is fixed on a horizontal rotation stage on top of XY stages and an optical module with a laser, and a galvoscanner is fixed on a vertical stage, and, in addition, the galvoscanner can be tilted relative another horizontal stage, perpendicular to the first rotation stage. The invention is specialised for laser processing (texturing) of a single object with rotational symmetry. It cannot be applied to laser process object with arbitrary 3D shape, and any optimisation could be applied when a batch of identical objects are processed.

The US patent US8941027B2 (2015-01-27) describes a 5-axes machine with XY linear stages and a vertical rotation stage on the base to fix a workpiece. A laser head, which could be rotated around a horizontal pivot stage, fixed on the Z-stage. The laser head comprises a two-mirror galvoscanner for directing the laser beam. The further embodiments of the patent provide details on the technical implementation of the laser machine, including blowing gas nozzle, suction nozzle for removal ablation products, as well as arrangement for CCD camera and touch probes for the process and object geometry control. The patent does not teach how such machine arrangement could be applied for laser treatment of a 3D object, especially batches of identical 3D objects.

The patent application CN105665920A (2016-06-15) discloses eight-axes machining mechanism for three-dimensional surface micro-structuring by a laser. It compromises a 5-axes machine tool and three-dimensional galvoscanner. The patent application provides a general description of a mechanical system with multiple degrees of freedom, needed for a real 3D processing. However, the patent does not teach how the laser process flow could be organised to get benefit in the processing performance.

### Tilting of the optical setup

The patent application US5149937A (1992-09-22) discloses process and device for the manufacture of cavities in workpieces through a laser beam. A laser focusing objective can be tilted during the ablation process relative to the stage parallel to the motion of the workpiece. The method is preferred for production of linear cavities with vertical or undercuts walls by laser ablation. However, it is not applicable for laser treatment of arbitrary 3D shaped objects.

Use of rotating stage with a platform to transport objects to a laser-process zone is known. For example, the US patent application US2020/0201281A1 (2020-06-25) discloses a device and method for the controlled processing of a workpiece. The object to the process by a laser is on a rotating platform, which is used to transport the object between the laser processing and inspection positions. In such an approach, enhancement in the laser process performance for batches of identical objects could only follow from parallelisation of laser processing and quality inspection tasks (batch of two objects). The whole system is not adopted for the processing of 3D shaped objects.

### Batch processing of identical objects

The patent application WO2019/231518A1 (2018-05-31) discloses a system for processing by laser beams multi-substrates on a carrier utilising the plurality of optical modules which increases cost and complexity of the system. The approach is applicable only on 2D shaped objects.

The US patent US10429742B2 (2015-11-03) discloses a method of manufacture of electrical circuits including receiving a CAD file containing electrical circuit design data for laser direct writing on a surface, the CAD file including CAD data for a multiplicity of dies to be processed by a laser and misalignment of dies, automatically configuring a direct-write machine for processing. Tessellation is applied to partition the whole substrate area into segments with a size as close as possible to the working field of a galvoscanner, but tessellation edges within a die. The method teaches how to avoid stitching within one object when performing laser writing the CAD data. Application of the method is limited to processing of multiple 2D objects, particularly dies, regularly placed on a carrier substrate. The proposed stitching-less method could not be applied for laser treatment of 3D objects.

The US patent application U2006/0278513A1 (2006-12-14) discloses a method of laser texturing of three-dimensional surface, based on approximation the object surface by adjusted polygons. The application teaches about limitations in focal depth of the used focusing optics. and ablation depth is controlled by layer-by-layer processing. The application does not teach about dynamic focus position adjustment and process limitations arising from deviation from the normal laser beam incident angle to the object surface.

### Technical problem to be solved

The invention aims to reduce a process cycle time when treating with a laser beam a plurality of identical 3D shaped object in a batch regime.

### Disclosure of the invention

The invention is defined by a method for batch processing of 3D objects using laser treatment according to the technical features disclosed in claim 1 and by a system implementing the method according to the technical features disclosed in claim 14. Preferred embodiments of this invention are given in the depended claims 2-13 and 15-17.

### Advantages of the invention

Laser processing cover a broad range of manufacturing technologies, including metal sheet cutting, welding, marking, cleaning. Lasers also are beneficial in microfabrication where precision down to micrometres and below are required. That include various kinds of texturing, patterned and surface modifications. There are well-established technologies for laser microprocessing on flat 2D surfaces. Lack of methods for reliable and cost-effective processing of 3D objects still limits uptake the technology to three-dimensional application fields like:
▪ laser texturing of 3D moulds;
▪ laser polishing, especially of laser 3D printed objects;
▪ laser annealing of thin film deposited on complex free-form surfaces, for example for embedded sensors;
▪ laser direct writing, including surface modification for moulded interconnect devices;
▪ laser marking on free-form surfaces.

The present invention discloses a method and a system implementing the method, which enable fast and efficient batch processing of 3D objects using laser treatment comprising the use of a laser processing machine with at least eight degrees of freedom for positioning of a focused laser beam relative to the 3D object.

### Brief description of the drawings

The above and other features and advantages of the present disclosure will become more readily apparent from the specific description and claims accompanied by the following drawings, in which:

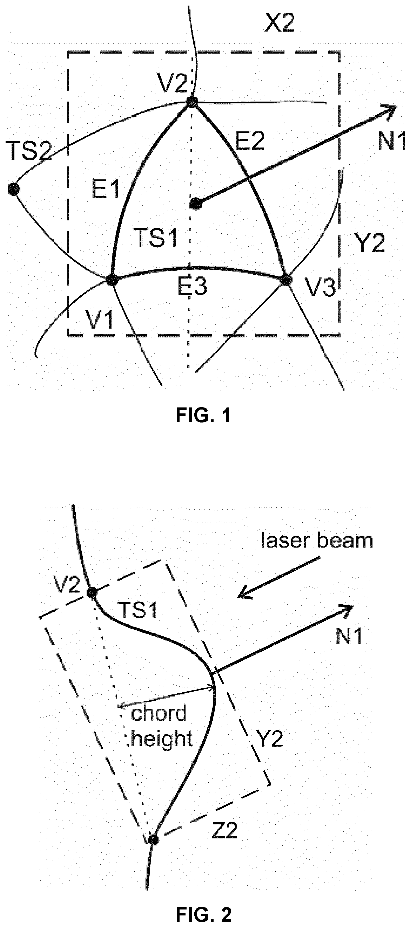

FIG. 1 shows a tessellation segment of a free-form 3D surface of a triangle shape described by its vertices (V1, V2, V3), edges (E1, E2, E3) and a normal to the surface (N1) at the centroid of the segment. The dashed square X2 and Y2 presents working field of a galvoscanner, defined by the f-theta objective lens where fast positioning of the laser beam is implemented.
FIG. 2 shows a cross-section of the tessellation segment, presented in FIG. 1. at a plane described by the dot line and the normal N1. Preferred direction of the incoming laser beam, parallel to the normal N1 is shown. Z2 presents the range of focal position shift implemented by the dynamic focusing unit. X2, Y2 and Z2 define the virtual working volume, within that, the fast manipulation of the focused laser beam is ensured preserving pointing direction of the laser beam.

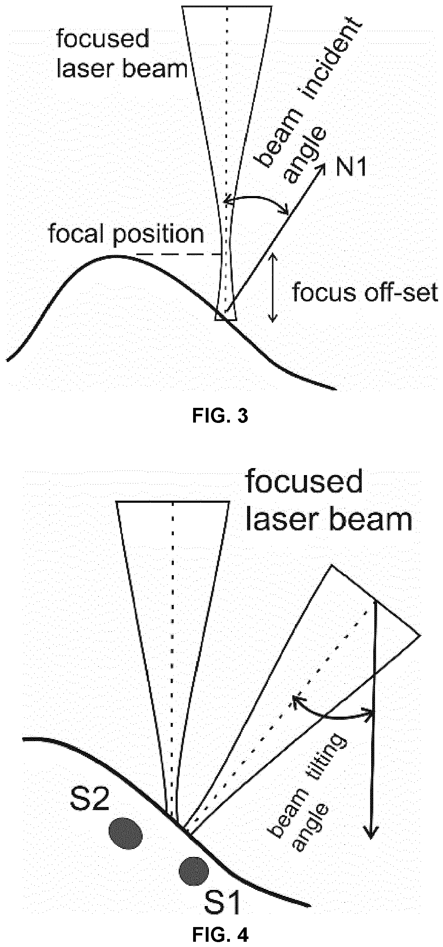

FIG. 3 shows a segment of 3D surface cross-section with the incoming focused laser beam. A focus off-set defines the distance between focal position of the beam and surface area where the beam hits it. A beam incident angle defines deviation of the beam pointing from the normal N1 and is a consequence of a surface inclination.
FIG. 4 shows irradiation of inclined surfaces by vertical-down and tilted laser beams. Projection of the circular beam profile on the surface in the case of tilted and normal to the surface beam, the profile remains circular (S1), while for the vertical-down beam, the projection is elliptical (S2), elongated in a slope direction, leading to reduced energy density.

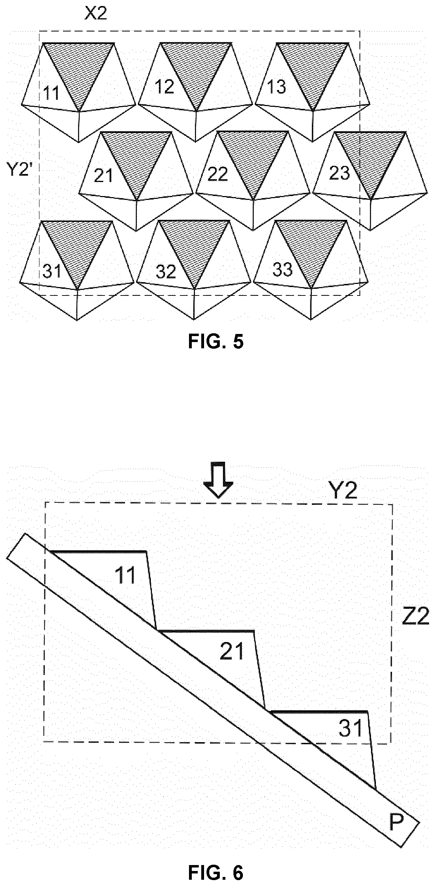

FIG. 5 shows a group of 3D objects (11-33) of pentagon prism shaped with dashed sides orientated in the same direction. The dashed square X2 and Y2 presents working field of a galvoscanner, defined by the f-theta objective lens where fast positioning of the laser beam is implemented. Y' ir projection of Y2 on the platform. The 3D object 23 does not fit into working area X2Y2 of the galvoscanner. The pentagon prism could be also understood as representation a group of tessellation triangles on an object. In that case, dashed areas represent tessellation segments with their normal pointing into the same direction.
FIG. 6 shows a side view of the 3D objects, presented in FIG. 5. tilted on a platform P relative to the laser beam direction (arrow). Z2 presents the range of focal position shift implemented by the dynamic focusing unit. X2, Y2 and Z2 define the virtual working volume, within that, the fast manipulation of the focused laser beam is ensured preserving pointing direction of the laser beam. The laser treatment of eight dashed segments within the virtual working volume is performed without motion of mechanical positioning and rotation axes.

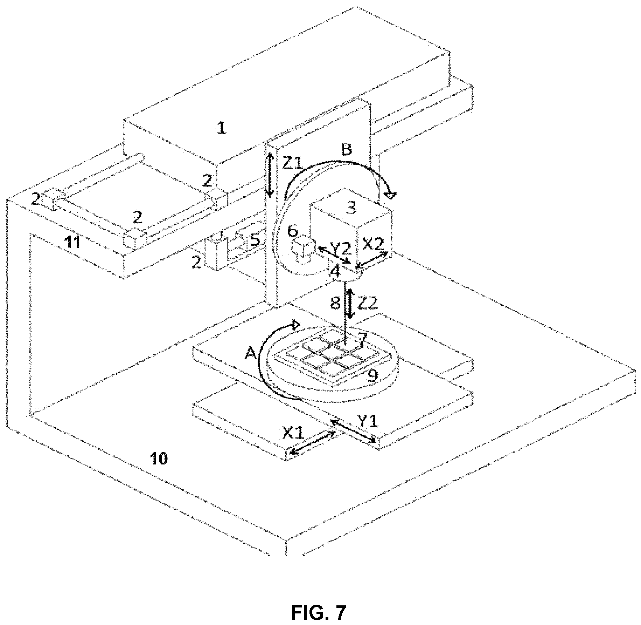

FIG. 7 shows a schematic representation of the system for batch processing of identical 3D-shaped objects by laser treatment.

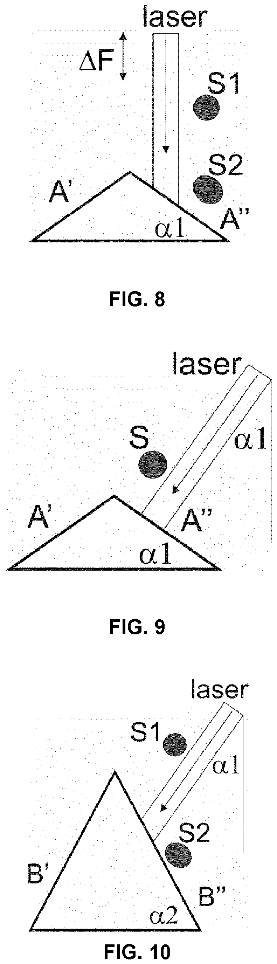

FIG. 8 shows a schematic view of the laser treatment of inclined surface A" with a vertically-down oriented laser beam. *α1* is the surface inclination angle, and the laser beam incident angle is *α1.* Projection of the circular laser beam S1 on the surface is elliptical S2, extended in the slope direction, leading to reduced energy density on the surface and difference in irradiated track width if the beam is scanned along the slope or up-down. The irradiation condition could be preserved on the whole A" surface by adjusting focus off-set Δ*F* utilizing the dynamic focusing unit.
FIG. 9 shows schematic view of the laser treatment of inclined surface A" with a tilted laser beam utilising the rotation axis B. When the laser beam is tilted by *α1,* it is perpendicular to the surface. Projection of the circular laser beam S on the surface is circular S,
FIG. 10 shows the case of laser treatment of inclined surface with a tilted laser beam, when the surface inclination angle *α2* is larger, that limits *α1* of galvoscanner tilting by B axis due to mechanical constrains. Projection of the circular laser beam S1 on the surface B" remains elliptical S2 due to not full compensation of inclination.

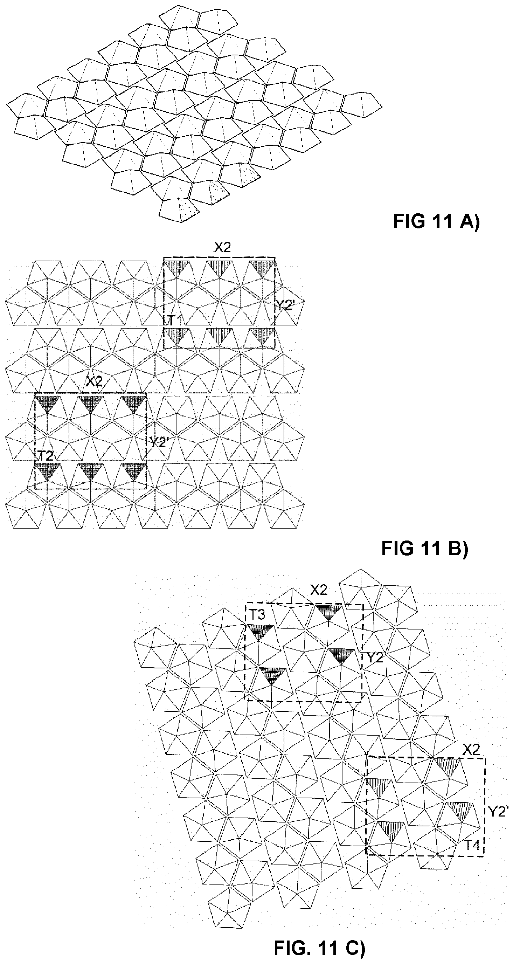

FIG. 11. A) Example of arrangement of pentagon pyramids in the batch processing; FIG.11 B) and FIG.11 C) XY projection of the batch on the platform, where dash rectangular shape areas T1, T2, T3 and T4 show the exaplary projection of the fast working field X2Y2' on the platform. The striped areas indicates the side walls of the pyramids perpendicular to the laser beam for the laser processing inside a single tessellation segment. In C case, the platform is rotated to face normals of the tessellation segments to laser beam direction.

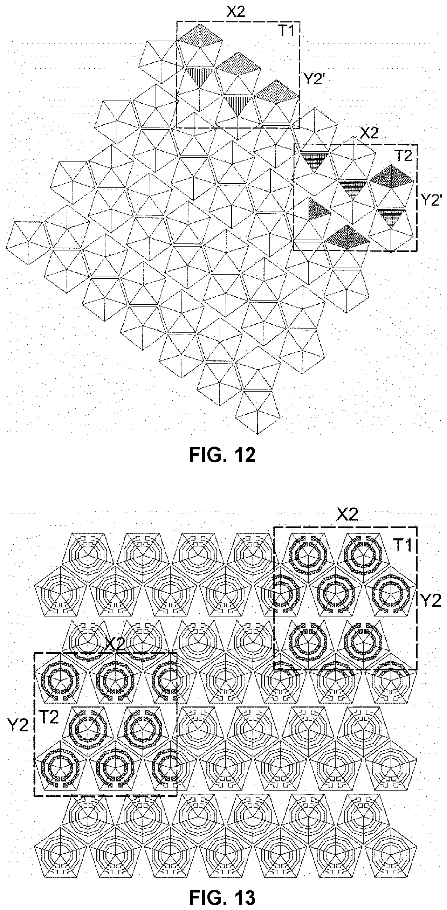

FIG. 12. XY projection of the batch, where dash rectangular shape areas T1 and T2 show the examplary projections of the fast working field X2Y2' on the platform. The platform is rotated to face normals of the tessellation segments closer to laser beam direction. The striped areas indicate the side walls of the pyramids which are included into a single tesellation segment for the laser processing.
FIG. 12. XY projection of the batch, where dash rectangular shape areas T1 and T2 show the examplary projections of the fast working field X2Y2' on the platform. The platform is rotated to face normals of the tessellation segments closer to laser beam direction. The striped areas indicate the side walls of the pyramids which are included into a single tesellation segment for the laser processing.
FIG. 13. Projection of the batch, where dash rectangular shape areas T3 and T4 show the examplary projections of the fast working field X2Y2 on the platform with 3D objects. The striped areas indicate the laser treatment areas. As the treatment should be seemless, overlapping between fast working field should be taken into account for stitching.

### Detailed description of preferred embodiments

Focused laser beam is a versatile tool for material processing. However, laser treatment of 3D-shaped objects requires manipulation of the laser beam or the object in 3D space to make access of the laser beam to the particular area of the surface. In most cases, the laser beam should hit the surface spot perpendicularly to the surface, which adds additional complexity in controlling not only position but also orientation of the laser beam relative to the object surface. Large surface area or big batches of products to process require fast and optimised manipulation with the beam and object with multiple degrees of freedom.

The 3D-shaped object cannot be laser-treated at a single fixed orientation of the laser beam relative to the object surface. The surface of 3D-shaped object initially should be divided into in to smaller areas, which could be uniformly and efficiently treated with a laser at fixed positions of slow mechanical stages. Partitioning the object surface in to segments (tessellation) is performed iteratively starting from the whole 3D CAD model of the object and dividing the maximum segment size in each iteration step until the tessellation segments satisfy predefined geometrical conditions such as the maximum edge length of a triangular field and the maximum chord height. For example, the maximum edge length of a triangular field is limited by the working field of a galvoscanner with a particular f-theta objective (FIG. 1), while the maximum chord height is limited by working distance of a dynamic focusing device (FIG. 2), shifting a focal position along of laser beam propagation direction or tolerances of a particular laser treatment process in a focus off-set (FIG.3).

The results of laser treatment are predictable when the laser beam, incident perpendicular to the surface, is focused on the surface. Any laser treatment technology accepts a certain deviation from perpendicularity and a focus off-set (FIG. 3). Primary, that is related to an increase in size of the laser beam projection on the surface S2 (FIG. 4), leading to the energy density reduction. At large beam incident angles, reflection from the surface increases significantly for most of materials, and as a consequence, the absorbed laser energy is further reduced. Various laser treatment methods accept different range of the perpendicularity and focus off-set tolerances, beyond which the process performance is no longer satisfactory. A set of optimised laser processing parameters and tolerances is specific for particular laser treatment and material of the workpiece and is defined experimentally. The laser energy density on the surface could be preserved fixing the focal position relative to the surface which could be implemented by the dynamic focusing unit. For surfaces areas with a large slop, tilting of the laser beam should be implemented (FIG. 4).

The laser-treatment process cycle time significantly depends on the number of tessellation segments on the object, as the maximum size of the segment is selected to be within the three-dimensional working volume defined by positioning limits of fast axes like the galvoscanner, while switching from one tessellation segment to another one is performed utilising much slower mechanical positioning and rotation stages.

Therefore, the primary task is to optimise partitioning of the whole 3D area to be laser-treated during the whole process cycle into minimum number of the segments, and later iteratively optimise a queue how those tessellation segments are treated taking in account distances between segments and required changes in laser beam pointing direction to get as close as perpendicular incident the segment surface at its centroid. Therefore, optimisation the workflow during the whole process cycle is very important: maximising use of fast stages with minimising repositioning steps by slower stages is an approach to reduce the laser treatment time. In a batch processing, multiple identical objects should be processed in an optimised way. A group of small objects could fit within the working area or volume of the fast stages, provided by the two-mirror galvoscanner and dynamic focusing unit, saving process time on repositioning. If the objects are of a complex 3D shape (freeform), the beam propagation direction relative to the object should be varied to keep the beam incident angle within particular range or access surface areas of the object obscured by the object or neighbouring objects. Combination of fast laser treatment by the galvoscanner and simultaneously movement of the platform the 3D objects could be implemented, eliminating additional time for repositioning.

In accordance with a preferred embodiment of the present invention, the method for laser treatment of batches of identical 3D objects is based on loading simultaneously a plurality of the objects attached to a platform into laser processing machine. Loading a batch of identical 3D objects simultaneously into the laser processing machine is performed on a platform which is fixed inside the laser processing machine on rotation stage B with a vertical axis. The platform for placement of multiple 3D objects is designed based on the symmetry of the 3D object and mechanical constraints of the laser processing machine comprising travel range of the stages and their relative location.

Dislocation and orientation of the 3D objects on the platform is optimised by using a computer-implemented numerical iteration method to minimise a number of platform repositioning during the laser treatment of all 3D objects on the platform. Optimal dislocation ensures wide accessibility of multiple objects surface to be processed with fast stages X2, Y2 and Z2. It is performed including the limitation of processing field of mechanical stages and the limitation of the object shadowing of neighbouring objects. After optimal placement and orientation of the batch, the 3D objects to be treated are attached to the platform at a predefined position and orientation of each 3D object.

The position and orientation of each 3D object on the platform after loading the platform into the laser processing machine is checked by a dedicated vision system measuring misalignment of the objects from the predefined position and orientation. After the checking procedure, the misalignment of each 3D object relative to the predefined position and orientation of the 3D object on the platform is applied as a correction data to modify the patterning CAD orientation and position relative to the 3D object during the laser treatment.

In accordance with the embodiment of the 3D object processing of the present invention, a 3D CAD model of the single 3D object to be processed is loaded to the computer-based processing control unit. The file comprises: .dxf, .stl, step, .SLDPR.

Partitioning the surface of the 3D object into the tessellation segments is performed based on the 3D CAD model of the 3D object. A computer-implemented iteration method is utilized to compute the shapes and positions of a plurality of tessellation segments. The procedure is aligned so that the laser treatment is performed with a minimum number of the segments.

The maximum dimensions of each tessellation segment are defined by a virtual three-dimensional working volume, limited by the working field provided by the two-mirror galvoscanner and a working range of the dynamic focusing unit, and by the process parameter window of the particular laser treatment process, including but not limited to the acceptable laser beam size and energy density (fluence) variations in 3D space (due to depth of focus, beam incident angle).

The virtual working volume is limited by the galvoscanner processing field which depends on the focal length of the galvoscanner objective. For example, the system uses 167 mm focal length objective giving 110 mm x110 mm flat processing field X2Y2. The depth of volume/segment for tessellation is given by the parameter Z2 of the dynamic focusing unit. For example, the system uses the "VarioScan" system (ScanLAB) which enables fast movement of focal position along the beam propagation direction by 40 mm.

The maximum dimensions of each tessellation segment are additionally limited by a laser process parameter window comprising the range of permitted variations in the laser beam size and energy density (fluence) on the surface of the 3D object due to focus off-set and the beam incident angle, experimentally-defined and depended on a particular type of laser treatment and material of the 3D object. A particular laser treatment process has a limited range of the parameters, when the treatment is feasible at all or its quality satisfy the defined criteria.

The focused laser beam is converging from the objective until the focal point and further diverging. The divergence angle and laser beam focus area on the surface depends on the wavelength of laser radiation, diameter of a collimated laser beam at the objective and the focal length of the objective. of the galvoscanner. The focal off-set leads to an increase in the beam diameter and as a consequence to the reduced energy density or intensity on the target. The dynamic focusing unit is utilized to keep the focus off-set within a defined range.

Another factor influencing the size of focused beam on the surface is the beam incident angle. If the required power density of the laser beam for the surface processing has the defined range comprising maximum and minimum value for the process, the volume/segment could be limited by a maximum angle of incidence of the laser beam. A circular beam hitting the surface at a certain beam incident angle, not corresponding to perpendicular is projected to elliptical spot. For example, at the 60 deg incident angle, the spot is two times elongated in one direction, leading to reduction of energy density on the inclined surface twice. If the process is limited more strict than the surface inclination, tilting of the laser beam relative to the object is necessary for the treatment. However, that surface area is a part of the adjusted tessellation segment with different normal orientation.

The maximum dimensions of each tessellation segment could be further reduced by the overlap distance when the particular laser treatment requires overlap between the adjacent tessellation segments to get uniform surface treatment or seamless stitching of the laser treatment segments. In order to have seamless patterning of the processed areas from one tessellation segment to another, a proper overlapping of adjacent segments should be selected. Usually, the laser processing and translation parameters are modified in the overlapped areas to maintain the required irradiation dose.

The accessibility by the laser beam to irradiate a particular surface area of the 3D object is important to avoid shadowing from neighbouring 3D objects on the platform or even the complex-shaped object itself. The process is done during the object's arrangement on the platform in a virtual environment of processing software. Orientation of the object on the platform is crucial during the procedure.

The tessellation iteration starts with a segment size covering the whole surface area of the 3D object to be treated, and the size is iteratively reduced step-by-step by dividing the size of a previous iteration step until all tessellation segments do not exceed the maximum dimensions but ensure that the number of the tessellation segments to be treated by a laser is minimal.

Further, a 3D CAD file of a pattern (e. g. texture pattern, electrical circuit design for MID) to be processed by a laser beam on the surface of the 3D object is loaded into processing control unit. The pattern to be processed is attached to the 3D object surface using the CAD file of 3D object. The patterning CAD file data with the tessellation segments are linked to the coordinate systems of the 3D CAD data from the 3D object and patterning files.

In the next step, the partitioning of the pattering 3D CAD data is performed, based on vertices and edges of the 3D object tessellation segments adjusted to the same area on the surface of the 3D object. This step is important part of the method implementation, where the edges of a pattern to be treated by a laser have to be accurately truncated at the edges of tessellation segments.

According to the embodiment of present invention the sequence of the 3D object laser-treatment workflow algorithm of all tessellation segments is created by a computer-implemented iteration method, where all tessellation segments of the 3D object surface to be laser-treated are arranged in a queue, and the repositioning time is estimated based on the performance parameters of the mechanical positioning stages and the galvoscanner, comprising acceleration and positioning speed (the laser treatment time is excluded from the optimisation). The repositioning time is iteratively minimised by prioritising use of faster stages and shorter distances.

In some cases, the shift to a close adjacent tessellation segment could be not the shortest way to move by mechanical axes. That could include movement of a few positioning stages when tilting of the laser beam or rotation of the platform are involved.

The workflow algorithm of laser treatment all 3D objects on the platform within a single process cycle is created by a computer-implemented iteration method. The process comprises multiplication the queue of the tessellation segments to be laser-treated for all 3D objects on the platform applying relative position and orientation of the 3D objects on the platform (FIG. 5, FIG. 6). In the next step, accessibility of the tessellation segments to be treated by the laser beam is checked virtually, avoiding shadowing from neighbouring 3D objects on the platform in the case, when the laser beam is tilted by rotation the galvoscanner around axis B for processing inclined parts of the surface. The most important step in the workflow algorithm preparation is merging together the tessellation segments to be laser-treated belonging to different 3D objects on the platform but fitting into the same virtual 3D working volume (limited by the working field provided by the two-mirror galvoscanner and a working range of the dynamic focusing unit).

The treatment of all 3D objects with the focused laser beam is implemented according to the patterning CAD file and the workflow algorithm, using the automated laser processing machine. The whole process includes the treatment step-by-step the tessellation segments to be laser-treated of all 3D objects according to the generated optimised queue. The batch laser processing procedure of 3D objects is performed by changing position and orientation of the platform, galvoscanner and distance of the dynamic focus according to an optimised for the shortest process time workflow during the laser treatment. Position and direction of the focused laser beam relative to the 3D object is controlled during the laser treatment using the automated laser processing machine with at least three linear positioning stages, two rotation stages, a two-mirror galvoscanner. The processing of the pattern preferably utilises the treatment of segment by fast motion of the galvoscanner and the dynamic focal distance management mean. After the process cycle, another identically batch with identically orientated 3D objects can be loaded into laser processing system with in very short time and repeat the process again.

According to the embodiment of the invention, the partitioning of the 3D object into the tessellation segments could be performed in advance, before preparing a design of the platform for fixing multiple 3D objects. The computer implemented control unit of the processing can be used for the optimisation of the platform design, by checking optimal arrangement of the objects on the platform. Further, the design of the platform for fixing multiple 3D objects is prepared according optimal object arrangement on the platform.

In most cases, laser treatment is required not on the whole surface of 3D objects: polishing contact pads, engraving logos or textures in particular areas of the object, texturing working surfaces on moulds, writing the circuitry on polymer body for moulded interconnect devices. The procedure of the surface partitioning into tessellation segments could be limited to the areas to be laser-treated with extension to check potential shadowing the laser beam by remaining parts of the object. The tessellation area is limited based on the patterning 3D CAD data.

In accordance with the present invention, the laser treatment can be applied for various laser technological processes comprising but not limited to laser texturing, laser surface modification, laser polishing and laser engraving. The processes comprise the full area or a part of whole 3D object surface processing.

Various applications of laser processing use different kind of lasers and require different set of laser processing parameters. Therefore, the laser treatment process window parameters comprise at least one of laser energy density (fluence) in J/cm², laser irradiation dose in J/cm², or laser intensity in W/cm² depending on the laser treatment.

During laser treatment of inclined convex or concave surfaces, the challenge is to preserve the laser irradiation conditions within a limited process window. A circular beam hitting the surface at a certain beam incident angle, not corresponding to perpendicular is projected to elliptical spot. For example, at the 60 deg incident angle, the spot is two times elongated in one direction, leading to reduction of energy density on the inclined surface twice. Increase in the projected spot size on the object surface also takes place when the surface area is not at the exact focal position, but closer to or further from the focus position (focus off-set).

The embodiment of described invention uses adjustment the laser pulse energy/or power density according to 3D CAD data and estimates beam incident angle and focus off-set of the surface at the current laser treatment position to ensure the required energy density (fluence) on the surface of the 3D object to be treated within the process window. The mention control of laser power is implemented with laser beam attenuator, driven by fast acousto-optic or electrooptic modulator controlled by processing software.

There are certain challenges when fast laser treatment is performed with the materials having low thermal conduction coefficient. As a result, fast laser beam translation over the surface with high beam powers results in heat accumulation that can cause undesired thermal side effects. For example, laser structuring of the plastics can result in surface melting caused by heat accumulation. That is particularly important for the short and ultrashort laser processing. Therefore, the pattern to be treated on the surface can result in unexpected and not acceptable surface response. For example, scanning of the laser beam, line by line with overlapping, leads to different temperature accumulation while scanning wide area (in the laser scanning direction), compared to narrow area. In accordance to the mentioned accumulation problem, embodiment of the method comprises the laser treatment process window described by the accumulated laser dose J/cm². The sequence of laser treatment is adjusted to avoid excessive heating by introducing required timing in laser irradiation dose accumulation during laser beam translation over the pattern, maintaining minimum and constant heating of the surface to avoid unnecessary thermal accumulation.

Another important option of the described embodiment is intended for problem of accumulation for pulsed lasers. The control of the high heat accumulation can be performed by the time control of the irradiation dosing. The described embodiment comprises ability to process surface using pulse scanning technique where scanning lines are deliberately omitted at regular intervals during the first pass in order to be filled later in subsequent laser beam passes. The mention technique - pulse or scan interlacing technique requires precise accuracy and the pulse-on-demand technology which is capable to stitched pulse timing and position in the range of several of microns accuracy.

The embodiment of the present inventions comprises the case, where the whole surface of the 3D object has to be processed with the laser according the pattern of the CAD model. The examples can be given as a case of surface texturing for modification surface properties of the wettability of the part, where all the surface of the part has to gain the function of hydrophobicity.

For the number of applications, the pattern of the surface has a certain period to be repeated, and the patterning CAD file contains a texture element to be uniformly repeated on the surface of the 3D object. According the embodiment of the invention the pattern to be laser processed can translated over the entire surface to be processed by multiplying pattern by the period.

In accordance with the embodiment of the method, the method can be applied but not limited to a patterning CAD file which contains electrical circuit design data to be written by a laser beam on the surface of the 3D object. The method can be applied for moulded interconnect devices, containing electric circuit directly on moulded polymer body, or for microscopic integrated devices on ceramic, glass, composite or other materials, for the circuit formation process using laser-based technologies as SSAIL (WO2018051210 A1).

The embodiment of the present invention comprises the treatment for application of circuit traces formation on 3D shaped dielectric objects using selective electroless metallisation. The process consists of laser processing and chemical steps: laser treatment of the circuit pattern where the metal circuit should be deposited; and the chemical steps for selective metal deposition on laser modified areas. The pattern of the circuit usually cover form few to 20 percent of the surface area. The circuit design can be implemented on limited number side of the objects (walls). For example, the circuit of the body is only on two perpendicular walls of moulded 3D object. In this case, the arrangement and tessellation of the object is performed including the position of the pattern on 3D object.

Another very important embodiment of the described method is an adaptation of the laser beam translation to the pattern projection on the inclined or curved surfaces, which is performed by computer implemented processing software. The projection distortion can appear when the scanning is performed on convex or concave surface. The laser beam translation of scanned overlapped lines can be affected as well. The correction is performed by computer implemented software according the 3D CAD file of the object to be processed.

In accordance with a preferred embodiment, the present invention comprises a system for batch processing of identical 3D-shaped objects by laser treatment. The laser system (FIG. 7) comprises a laser (1), beam delivery optics (2), three linear stages (X1, Y1 and Z1), two rotation stages (A and B); two-axes galvoscanner (X2, Y2) (3), a focusing objective, preferable telecentric f-theta objective (4), dynamic focusing unit (5), shifting the focal position in direction Z2, perpendicular to X2 and Y2 and a video camera with magnifying objective (6). The linear stage X1 is fixed horizontally to a base. The linear stage Y1 is mounted horizontally on a moving part of the linear stage X1 perpendicularly to its motion, and the rotation stage A is mounted on a moving part of the linear stage Y1. The linear stage Z1 is mounted vertically on a support structure above the X1, Y1 and A stages. The rotation stage B is mounted on a moving part of the linear stage Z1. A two-axis beam deflection device with fast axes X2 and Y2, preferable a galvoscanner (3) is mounted on the rotation stage B. The scan speed of the galvoscanner is higher than the speed of linear positioning stages.

The laser (1), beam delivery optics (2) and a dynamic focusing unit (5), mounted on the support structure. The laser beam is transmitted through the delivery optics (2) to the dynamic focusing unit (5) and further to the galvoscanner (3). The f-theta focusing objective lens (4) attached to the galvoscanner (3) focuses the laser beam to a focus spot at a focal position. The galvoscanner (3) orientation is adjusted by the vertical stage Z1 and the rotary stage B in order to have the right focal distance and orientation to the surface of 3D object to be processed (7) and can be used during the repositioning steps. The galvoscanner (X2, Y2) deflects the laser beam (8) over the 3D object surface. The galvoscanner deflects the laser beam within a two-dimensional field, defined by the focal length of the f-theta objective. The focal position along the beam propagation direction Z2 during the laser treatment is controlled by the dynamic focusing unit (5). Direction of the focused laser beam is tilted about a horizontal axis by the rotation stage B. A control unit is configured to managing all the system components, comprising operation of the laser, movement, position, and orientation of all positioning and rotation stages, operation of galvoscanner and dynamic focusing unit, according to a process algorithm.

3D objects to be treated by the laser beam are loaded into the system on a platform (9). The platform for placement of multiple 3D objects is designed based on the symmetry of the 3D object and mechanical constraints of the laser processing machine comprising travel range of the stages (X1, Y1, Z1, A, B) and their relative location. Dislocation and orientation of the 3D objects on the platform is optimised by using a computer-implemented numerical iteration method to minimise the number of platform repositioning_during the laser treatment of all 3D objects on the platform. The 3D objects to be treated are attached to the platform at a predefined position and orientation of each 3D object and the platform with the 3D objects is attached to the rotation stage A at defined position and orientation. The platform has references marks on it for calibration of the 3D object position and orientation on it.

A vision system with magnifying objective (6) is fixed on the support structure above the platform (9) and takes images of the platform (9) with the 3D objects (8) after loading the platform (9) into the laser processing machine. An image recognition software compares positions and orientation of all 3D objects placed on the platform relative to the reference marks with the platform design CAD containing information on locations and orientations of the 3D objects on the platform (9). The measured misalignment of each 3D object relative to the predefined position and orientation of the 3D object on the platform is used as a correction data to modify the patterning CAD orientation and position relative to the 3D object during the laser treatment.

The system is controlled by the control unit, possessing a computer. The control unit is automatically performing partitioning the surface of the 3D object into the tessellation segments by using a computer-implemented iteration method, based on the 3D CAD model of the 3D object loaded into control unit. A plurality of tessellation segments, including their shape, position and orientation, is computed iteratively. The iteration starts with a segment size covering the whole surface area of the 3D object to be treated, and the size is iteratively reduced step-by-step by dividing the size of a previous iteration step until all tessellation segments do not exceed the maximum dimensions but ensure that the number of the tessellation segments to be treated by a laser is minimal. Maximum dimensions of each tessellation segment are defined by:
1. a virtual three-dimensional working volume limited by the working field provided by the two-mirror galvoscanner (3) and a working range of the dynamic focusing unit (8);
2. a laser process parameter window comprising the range of permitted variations in the laser beam size and energy density (fluence) on the surface of the 3D object due to focus off-set and the beam incident angle.

The permitted window of laser process parameters is experimentally defined in advance and depends on a particular type of laser treatment (polishing, engraving, texturing, etc.) and material of the 3D object. If the particular laser treatment requires overlap between the adjacent tessellation segments to get uniform surface treatment or seamless stitching of the laser treatment segments, the maximum dimensions of each tessellation segment are reduced by the overlap distance.

The laser treatment position on the 3D object is defined by the loaded patterning CAD file to be processed. The linkage the patterning CAD file data with the tessellation segments is performed by the control unit automatically by merging coordinate systems of the 3D CAD data from the 3D object and patterning files. Data of the pattering 3D CAD file are partitioned based on vertices and edges of the 3D object tessellation segments adjusted to the same area on the surface of the 3D object. When partitioning and merging is finished, the control unit is analysing data and creating a workflow algorithm of how all tessellation segments of the 3D object will be laser-treated. By using a computer-implemented iteration method, all tessellation segments of the 3D object surface to be laser-treated are arranged in a queue, and the repositioning time is estimated based on performance parameters of the positioning stages, comprising acceleration and positioning speed. The repositioning time is iteratively minimised by prioritising use of faster stages and shorter distances.

The current state-of-the-art positioning stages with linear motor are moving at the speed of a few meter per second. A galvoscanner with accuracy sufficient for laser microfabrication and standard f-theta lens objective with a focal length of 167 mm is able to move nearly 10 times faster in the working area of about 110 mm x110 mm. Various approaches are implemented to control focal position at comparable speed. For example, a device "varioscan20" of Scanlab AG (Germany) is able to shift focal position in the range of +/- 32 mm at a speed of 4.5 meters per second using the same f-theta lens as an objective. Combining a two-mirror galvoscanner with a dynamic focusing unit of that kind, enables to get a three-dimensional working volume, where the focused laser beam can be located very fast. Addition of linear and rotation positioning stages can extent the processing volume significantly but at the cost of reduced speed. Required rotation of the platform, tilt of galvoscanner, translation of XYZ stages should be checked within their positioning limits. The arrangement of the objects for the required fast field and maximum process angle must be checked with the range of mechanical stages of the machine: 3 orthogonal linear and 2 rotational stages, including fast stages as a possibility to broaden the full system processing field at the boundary of the field accessible by mechanical stages.

Priority of the positioning axis utilization is based on their positioning speed, acceleration and load:
∘ X2, Y2 - galvoscanner (3);
∘ Z2 - dynamic focusing unit (5);
∘ Y1 - upper stage;
∘ X1 - bottom stage;
∘ A - platform rotation stage mainly to change orientation of the platform to treat by the laser beam different sides of the 3D objects;
∘ B - galvoscanner rotation stage, requires simultaneously motion of Z1 and optional X1 motion to achieve another laser beam incident angle at the same location of the 3D object;
∘ Z1 vertical stage with galvoscanner on it, alone is used to set vertically focus position at the centroid of the tessellation segment.

Additional step of the workflow algorithm formation is implemented by the control unit taking into account all 3D objects loaded on the platform (9) into the system to prepare an order how all 3D objects on the platform will be laser-treated within a single process (loading) cycle. The queue of the tessellation segments of the 3D object to be laser-treated is multiplied for all 3D objects on the platform including relative position and orientation of the 3D objects on the platform. Accessibility of the tessellation segments to be treated by the laser beam is checked virtually, avoiding shadowing from neighbouring 3D objects on the platform when the laser beam is tilted for processing inclined parts of the surface. To speed-up the process, the tessellation segments to be laser-treated belonging to different 3D objects on the platform but fitting into the same virtual 3D working volume (limited by the working field provided by the two-mirror galvoscanner and the working range of the dynamic focusing unit are merged together.
▪ After the preparation stage, which is valid for multiple loadings of the platform with a plurality of the same 3D objects, the control unit starts the laser processing cycle. The focused laser beam is treating all tessellation segments of all 3D objects on the platform according to a queue of the tessellation segments based on the computer-simulated workflow, optimised for the shortest process cycle. Position and direction of the focused laser beam relative to the 3D objects is controlled during the laser treatment using the automated laser processing machine. The treatment of the pattern on any tessellation segment is performed utilising fast motion of the galvoscanner and the dynamic focusing unit. Positioning speed of the galvoscanner is higher than the speed of the linear stages and the dynamic focal distance management means.

. The dynamics focusing unit controls the focal position of the laser beam relative to the 3D object surface. The positioning stages X1 and Y1 are used to locate the process area within field of view of the galvoscanner. The platform with a batch of objects to process is rotated at a particular angle to face the next plane of the tessellated object to the laser beam.

The preferable case is when the beam propagates perpendicularly to the surface of the object at least at the centroid of the tessellation segment. In that case, the area which could be treated using only fast positioning axes (X2, Y2 and Z2) is the largest. For laser treatment of surface areas with a large slope, the galvoscanner is tilted, and laser beam propagates to the object at a particular angle compensating the slope. Tilting of the galvoscanner is implemented to adjust the beam incident angle by rotation axis B. In this way, compensation of the laser beam projection on the surface from elliptic (FIG. 8) to circular (FIG. 9) is achieved. However, tilting angle of the galvoscanner is limited by mechanical constrains of the laser system. Therefore, in the case of a large slope, the preferable perpendicularity could not be achieved and that is taken into account during the tessellation process. For surface areas with steep slope (large inclination), the full compensation by galvoscanner tilting could not be achieved due to mechanical constrains of the whole positioning system (FIG. 10) and shadowing by other parts of the 3D object, or other 3D objects on the platform. The laser treatment is performed on inclined surface (laser beam is not perpendicular to the surface), and tessellation segments are reduced in size to keep laser energy density and focus off-set within satisfactory range of the particular laser treatment process.

The opposite case is when surface of the 3D object in the laser treatment area has a small slope, that variation of the laser beam projection and related irradiation conditions (e. g. energy density) and track width are within limits of the laser treatment process, and the height of the 3D object (within the laser treatment area) is less that the range of the dynamic focusing unit. The partitioning of the 3D object surface is not necessary (a single segment). The laser treatment is performed the vertically-down oriented galvoscanner object-by-object. Additional speed-up of the process is possible adding synchronous motion of the platform by X1 and Y1 stages during the treatment utilizing fast laser beam deflection by axes X2, Y2 and Z2 in a "mark on fly" regime.

The laser irradiation conditions vary during the laser treatment process of 3D free-shaped objects due to surface inclination relative to the laser beam incident direction, or focus off-set which is not compensated by the dynamic focusing unit. Therefore, one embodiment of the invention introduces a means to control dynamically the laser pulse energy. The control unit estimates variation of the surface irradiation conditions based on the geometry of the 3D object within the tessellation segment and pre-programed in the workflow algorithm relative orientation of the laser beam pointing direction to the local surface area and focal position. The latest two cover the mechanical constrains of the system. The required energy density (fluence) on the surface of the 3D object to be treated is preserved within the process window by adjusting the laser pulse energy utilising an attenuator configured in the beam delivery optics based on acoustic-optical or electro-optical modulation.

The embodiment of the invention discloses the dynamic focusing unit which is a means for fast shifting focal position along the beam propagation direction Z2 perpendicular to the processing field X2Y2 (field depth). the dynamic focusing unit could be realised based on, but not limited to galvanometric, piezoelectric or tuneable liquid lens techniques, which implement fast movement of an optical lens or its deformation leading to fast adjustment of laser beam divergence angle at the exit of the dynamic focusing unit.

### Example 1

Reduction of surface friction is important case for many engineering areas. This example is given for laser texturing to increase lubrication of pentagonal pyramid surface made of steel. The total height of the pyramid is 15 mm; the side length is 25 mm; dihedral angle (between walls) 24.6°. A solid-state Nd: YVO₄ picosecond laser Atlantic (EKSPLA Ltd., Lithuania) with an output wavelength of 1064 nm and a maximum output power of 50 W was used. The 3D laser processing system (ELAS Ltd., Lithuania) contains: three linear stages (X1, Y1 and Z1), two rotation stages (A and B); two-axes galvoscanner (X2, Y2) 3, telecentric focusing system 4, dynamic focusing unit 5, shifting the focal position in direction Z2, perpendicular to X2 and Y2 and a video camera with magnifying objective 6; the linear stage X1 is fixed horizontally to a base; the linear stage Y1 is mounted horizontally on a moving part of the linear stage X1 perpendicularly to its motion, and the rotation stage A is mounted on a moving part of the linear stage Y1; the linear stage Z1 is mounted vertically on a support structure above the X1, Y1 and A stages; the rotation stage B is mounted on vertical Z axis. The galvoscanner is fixed on rotational tilting axis B.

Translation Parameters of the positioning stages (Standa Ltd., Lithuania) used in the system:
- X speed 300 mm/s, acceleration: 500 mm/s² accuracy: ±1 µm.
- Y speed 300 mm/s, acceleration: 500 mm/s² accuracy: ±1 µm.
- Z speed 100 mm/s, acceleration: 300 mm/s² accuracy: ±1 µm.
- A rotational axis speed 150 °/s, acceleration: 2000 °/s² accuracy±24 µrad.
- B rotational axis speed 100 °/s, acceleration: 300 °/s² accuracy±14 µrad.

The galvoscanner - "IntelliScan 14" (Scanlab AG, Germany) with F-theta telecentric focusing lens has a focal length of 160 mm (Linos-Ronar, Germany). Laser writing speed with the galvoscanner is 15 m/s. The dimeter of focused laser beam is 25 µm. Laser writing was performed by scanning parallel lines with partially overlap of the scan lines, the hatch was equal to 20 µm. The galvoscanner field X2Y2 was 110 mm ×110 mm. The dynamic focus module uses a two lenses and fast dynamic distance change between them, wherein the dynamic focus lens focal length was 60 mm, the first focus lens focal length was 200 mm, and the second focus lens focal length was 800 mm. The speed of the dynamic Z2 axis was 4 m/s, acceleration was 10 m/s².

area batch of 52 objects was configured on the platform. All walls of the pyramid, except its bottom have to be modified with the laser. The laser energy density (fluence) parameter window is 7-7.5 J/cm². Due to tight requirements in laser fluence, each side wall has to be processed with laser beam perpendicular to the surface of the object.

The pyramids have been optimally configured on the platform with the size 300 mm x 300 mm in order to have minimum tessellation within the galvoscanner and fast objective field which size was 60 mm x110 mm x110 mm (FIG. 11). There are 40 tessellation segments on the platform for the processing. Fast axes of said virtual working volume can cover from 4 to 8 side walls of the pyramids keeping the laser beam perpendicular to the side wall during the texturing.

Time of each step movement of a mechanical axis for repositioning includes:
∘ acceleration/deceleration;
∘ motion at defined speed;
∘ delay in the control of the system.

Time of laser writing by the galvoscanner includes:
∘ delay in the control for galvoscanner;
∘ scanner ON delay;
∘ marking speed
∘ jump speed;
∘ acceleration of scanner mirrors.

Overall, the batch processing took 339.98 s (repositioning time 80.55 s, galvo jump time 12.32 s, galvo mark time 247.11 s).

For comparison, the total time of a single-part processing was 8.93 s (repositioning time 3.94 s, galvo jump time 0.24 s, galvo mark time 4.75 s). To process 52 part by the single-part processing, excluding loading into machine time would take 8,93 s x 52 = 464.36 s. However, during the single-part processing, a lot of time was wasted for each part loading. For example, replacement time of a single 3D part with robot hand takes ~ 2 s, for 52 pieces, the loading time increases the processing time by 104 s. Total processing (cycle) time including part replacement is 568.36 s.

The batch processing according to the invention saves 228.38 s per 52 parts or more than 40 % of the processing time.

### Example 2

Laser polishing process of the steel pyramid has been demonstrated. The same pyramid as represented in example 1 was used in example 2 for the surface polishing. The process was implemented with the same system which was used in Example 1. The working regime of the picosecond laser was switched to nanosecond pulses. Laser polishing has the laser fluence parameter window from 5-6.9 J/cm². The slope of the pyramid sidewalls is too high to maintain the required fluence while processing with the laser beam perpendicular to the platform. However, the dihedral angle (between side walls) is small enough to enable a two-walls laser processing by applying the laser beam processing at small angles of incidence. There is a 52-objects batch to be processed on the platform. All walls, except the bottom of the pyramid have to be processed with laser. The pyramids have been optimally arranged on the platform with the size 300 mm x 300 mm in order to have minimum tessellation within the scanner and fast objective field which size is 60 mm x110 mm x110 mm (FIG. 12). The laser writing speed with the galvoscanner was 15 m/s, dimeter of the focused laser beam was 25 µm. Laser writing was performed by scanning parallel lines with partially overlap (hatch of 20 µm). The tessellation into segments including two neighbour side walls was implemented (FIG. 11). There are 26 tessellation segments on the platform for the processing.

Overall, the batch processing took 314.6 s (stage shift time 60.97 s, galvo jump time 10.34 s, galvo mark time 243.29 s.)

For comparison, the total time of a single-part processing was 7.35 s (repositioning time 2.36 s, galvo jump time 0.24 s, galvo mark time 4.75 s). To process 52 part by a single-part processing excluding loading time takes 7.35 s x 52 = 382.2 s. The loading time of a single 3D part with a robot hand takes ~ 2 s, for 52 would increases processing time by 104 s. The total processing time including part loading into machine would be 486.2 s.

The batch processing saves 171.6 s per 52 parts or more than 35 % of the processing time.

### Example 3

The 3D objects processing is an important part for electrical circuit fabrication for moulded interconnect devices. This example encloses the circuit formation on moulded part of PA4 polymer having the same shape of 3D pentagonal pyramid as previous examples. The circuit traces fabrication uses the Selective Surface Activation Induced by Laser - SSAIL method. SSAIL is a three-step process: the first is surface modification by laser; second is chemical activation of modified areas; and the last step is metal deposition by electroless plating. The processing was performed with the same laser processing system described in Example 1. The fabricated circuit pattern covers all 5 walls of the pentagonal pyramid excluding only the bottom. The process of laser surface modification has quite wide parameter window of laser fluence from 4.3 to 7.4 J/cm², allowing laser processing at angles of incidence up to 50°. Therefore, the processing was performed with the laser beam directed vertically down, perpendicular to the platform, using only the X1, Y1 positioning stages and fast scanning axes of the galvanometer and dynamic focusing unit. The pyramids have been optimally arranged on the surface in order to have minimum tessellation within the galvoscanner and fast objective field which size is 60 mm x110 mm x110 mm (FIG. 13). There are 9 tessellation segments on the platform for the processing.

Overall, the batch processing took the total time 102.54 s (mark time 39.85 s, jump time 62.67 s).

For comparison, the total time of a single-part processing was 0.81 s (repositioning time 0 s, galvo jump time 0.1 s, galvo mark time 0.71 s). To process 52 part by a single-part processing excluding loading time takes 42.12 s. The loading time of a single 3D part with a robot hand takes ~ 2 s, and for 52 objects the loading increases the processing cycle time by 104 s. The total processing time including part loading into machine would be 146.12 s.

The batch processing saves 43.58 s per 52 parts or ~ 30 % of the processing time.

## Claims

1. A method for batch processing of identical 3D-shaped objects by laser treatment comprising:
∘ loading a batch of identical 3D objects into a laser processing machine;
∘ loading a 3D CAD model of the object;
∘ partitioning the surface of the 3D object into multiple tessellation segments restricted by dimensions of a working field provided by a two-mirror galvoscanner with an objective;
∘ loading a CAD file of a pattern, to be treated by a laser beam on the surface of the 3D object;
∘ linking the patterning CAD file data with the tessellation segments;
∘ creating a workflow algorithm of how all tessellation segments of the 3D object are laser-treated;
∘ creating a workflow algorithm of how all loaded 3D objects are laser-treated within a single process cycle;
∘ treating all 3D objects with the focused laser beam according to the patterning CAD file and the workflow algorithms, wherein:
▪ position and direction of the focused laser beam relative to the 3D object are controlled during the laser treatment using the automated laser processing machine with at least three linear positioning stages, two rotation stages, the two-mirror galvoscanner;
**characterised in that**
• loading the batch of identical 3D objects (7) simultaneously into the laser processing machine is performed on a platform which has a means to rotate the platform around a vertical stage inside the laser processing machine, wherein:
▪ the platform for placement of multiple 3D objects is designed based on the symmetry of the 3D object and mechanical constraints of the laser processing machine comprising a travel range of the stages and their relative location;
▪ dislocation and orientation of the 3D objects on the platform are optimised by using a computer-implemented numerical iteration method to minimise the number of platform repositioning_during the laser treatment of all 3D objects on the platform;
▪ the 3D objects to be treated are attached to the platform at a predefined position and orientation of each 3D object;
• checking the orientation and position of each 3D object on the platform is performed after loading the platform into the laser processing machine is implemented by a dedicated vision system to measure misalignment of the objects from the predefined position and orientation, wherein
▪ the misalignment of each 3D object relative to the predefined position and orientation of the 3D object on the platform is applied as correction data to modify the patterning CAD orientation and position relative to the 3D object during the laser treatment,
• partitioning the surface of the 3D object into the tessellation segments is performed by using a computer-implemented iteration method, wherein
▪ the partitioning is achieved based on the 3D CAD model of the 3D object, computing the shapes and positions of a plurality of tessellation segments;
▪ the maximum dimensions of each tessellation segment are defined by a virtual three-dimensional working volume limited by the working field provided by the two-mirror galvoscanner and a working range of a means for dynamic focal distance management;
▪ the maximum dimensions of each tessellation segment are additionally limited by a laser process parameter window comprising the range of permitted variations in the laser beam size and energy density (fluence) on the surface of the 3D object due to focus off-set and the beam incident angle, experimentally-defined and dependent on a particular type of laser treatment and material of the 3D object;
▪ the maximum dimensions of each tessellation segment are reduced by the overlap distance when the particular laser treatment requires overlap between the adjacent tessellation segments to get uniform surface treatment or seamless stitching of the laser treatment segments;
▪ the iteration starts with a segment size covering the whole surface area of the 3D object to be treated, and the size is iteratively reduced step-by-step by dividing the size of a previous iteration step until all tessellation segments do not exceed the maximum dimensions but ensure that the number of the tessellation segments to be treated by a laser is minimal;
• linking the patterning CAD file data with the tessellation segments is performed by;
▪ merging coordinate systems of the 3D CAD data from the 3D object and patterning files;
▪ partitioning the pattering 3D CAD data based on vertices and edges of the 3D object tessellation segments adjusted to the same area on the surface of the 3D object;
• creating a workflow algorithm of how all tessellation segments of the 3D object are laser-treated is performed by a computer-implemented iteration method, wherein:
▪ all tessellation segments of the 3D object surface to be laser-treated are arranged in a queue, and the repositioning time is estimated based on performance parameters of the positioning stages, comprising acceleration and positioning speed;
▪ the repositioning time is iteratively minimised by prioritising the use of faster stages and shorter distances;
• creating a workflow algorithm of how all loaded 3D objects are laser-treated within a single process cycle is performed by a computer-implemented iteration method, wherein:
▪ the queue of the tessellation segments to be laser-treated is multiplied for all 3D objects on the platform, including the relative position and orientation of the 3D objects on the platform;
▪ accessibility of the tessellation segments to be treated by the laser beam is checked virtually, avoiding shadowing from neighbouring 3D objects on the platform when the laser beam is tilted for processing inclined parts of the surface;
▪ the tessellation segments to be laser-treated belonging to different 3D objects on the platform but fitting into the same virtual 3D working volume (limited by the working field provided by the two-mirror galvoscanner and the working range of the means for dynamic focal distance management) are merged together;
• treating all 3D objects with the focused laser beam is performed according to a queue of the tessellation segments to be laser-treated, wherein:
▪ the treatment of the pattern on any tessellation segment is performed utilising the galvoscanner, having a positioning speed which is higher than the speed of the linear stages, and the dynamic focal distance management means.

2. The method according to claim 1, **characterised in that** partitioning of the 3D object into the tessellation segments is performed in advance, before preparing a design of the platform for fixing multiple 3D objects.

3. The method according to claim 1, **characterised in that** partitioning of the 3D object into the tessellation segments is limited to the surface area of the 3D object where the laser treatment should be performed based on the patterning 3D CAD data.

4. The method according to claim 1, **characterised in that** the laser treatment comprises at least one of laser texturing, laser surface modification, laser polishing and laser engraving.

5. The method according to claim 1, **characterised in that** the laser treatment process window parameters are defined at least by one of laser energy density (fluence) in J/cm², laser irradiation dose in J/cm², or laser intensity in W/cm² depending on the laser treatment;

6. The method according to claim 1, **characterised in that** the energy density (fluence) on the surface of the 3D object to be treated, required for the laser treatment, is preserved within the process window by adjusting the laser pulse energy according to 3D CAD data and the estimated beam incident angle to the surface of the 3D object and a focus off-set of the surface at the current laser treatment position.

7. The method according to claim 1, **characterised in that** deposition of the laser irradiation dose during laser beam scanning over the pattern is maintained to avoid heat accumulation on the surface of the 3D object.

8. The method according to claim 7, **characterised in that** the deposition of the laser irradiation dose during laser beam scanning over the pattern is maintained by the pulse and scanning line interlacing approach, and the required irradiation dose is achieved using a few consecutive scans over the same surface area.

9. The method according to claim 1, **characterised in that** the patterning CAD file contains texture to be written by a laser beam on the whole surface of the 3D object.

10. The method according to claim 1, **characterised in that** the patterning CAD file contains a texture element to be uniformly repeated on the surface of the 3D object.

11. The method according to claim 1, **characterised in that** the patterning CAD file contains electrical circuit design data to be written by a laser beam on the surface of the 3D object.

12. The method according to claim 1, **characterised in that** the laser treatment is laser writing the patterns of an electrical circuit on dielectrics for selective electroless metallisation.

13. The method according to any preceding claims, **characterised in that** data sent to the positioning system are corrected by a computer-implemented processing software to compensate the pattern distortions due to the pattern projection on concave and convex curved or inclined parts of the surface of the 3D object.

14. A system for batch processing of identical 3D-shaped objects (7) by laser treatment comprising:
∘ a linear positioning stage X1, fixed horizontally to a base (10);
∘ a linear positioning stage Y1, mounted horizontally on a moving part of the linear positioning stage X1 perpendicularly to its motion;
∘ a rotation stage A, mounted on a moving part of the linear positioning stage Y1;
∘ a linear positioning stage Z1, mounted vertically on a support structure (11) above the X1, Y1 and A stages;
∘ a rotation stage B, mounted on a moving part of the linear positioning stage Z1;
∘ a two-axis beam deflection device (3) with laser beam scanning in X2 and Y2 directions, preferably a galvoscanner, mounted on the rotation stage B, wherein the scan speed of the galvoscanner is higher than the speed of linear positioning stages;
∘ a laser (1), beam delivery optics (2) and a dynamic focusing unit (5), mounted on the support structure, wherein;
▪ the laser beam can be transmitted through the delivery optics (2) to the dynamic focusing unit (5) and further to the galvoscanner (3);
▪ a f-theta focusing objective lens (4) attached to the galvoscanner (3) can focus the laser beam to a focus spot at a focal position;
▪ the galvoscanner (3) can deflect the direction of the laser beam within a two-dimensional field, defined by the focal length of the f-theta objective;
▪ the focal position along the beam propagation direction can be controlled by the dynamic focusing unit (5);
▪ direction of the focused laser beam can be tilted about a horizontal axis by the rotation stage B;
∘ a control unit is provided, wherein the control unit is managing all the system components, comprising operation of the laser, movement, position, and orientation of all positioning and rotation stages, operation of galvoscanner and dynamic focusing unit, according to a process algorithm;
**characterised in that**
• the system is provided with a platform (9) for placement of plurality of 3D objects (7) to be treated by the laser beam, wherein:
▪ the platform (9) for placement of multiple 3D objects (7) is configured based on the symmetry of the 3D object and mechanical constraints of the laser processing machine comprising travel range of the stages (X1, Y1, Z1, A, B) and their relative location;
• the platform (9) is attached to the rotation stage A at defined position and orientation;
• the platform (9) has references marks on it for calibration of the 3D object (7) position and orientation on it;
• a vision system (6), fixed on the support structure (11) above the platform, configured to take images of the platform with the 3D objects (7) after loading the platform into the laser processing machine, wherein:
▪ an image recognition software is configured to compare the positions and orientation of all 3D objects (7) placed on the platform (9) relative to the reference marks with the platform design CAD containing information on locations and orientations of the 3D objects;
▪ further being configured to use the measured misalignment of each 3D object relative to the predefined position and orientation of the 3D object on the platform (9) as correction data to modify the patterning CAD orientation and position relative to the 3D object during the laser treatment,
• the control unit is configured automatically to perform:
▪ partitioning the surface of the 3D object into the tessellation segments by using a computer-implemented iteration method, wherein:
∘ the partitioning is achieved based on the 3D CAD model of the 3D object loaded into the control unit, computing the shapes and positions of a plurality of tessellation segments;
∘ the maximum dimensions of each tessellation segment are defined by a virtual three-dimensional working volume limited by the working field provided by the two-mirror galvoscanner and a working range of the dynamic focusing unit;
∘ the maximum dimensions of each tessellation segment are additionally limited by a laser process parameter window comprising the range of permitted variations in the laser beam size and energy density (fluence) on the surface of the 3D object due to focus off-set and the beam incident angle, experimentally-defined and depended on a particular type of laser treatment and material of the 3D object;
∘ the maximum dimensions of each tessellation segment are reduced by the overlap distance when the particular laser treatment requires overlap between the adjacent tessellation segments to get uniform surface treatment or seamless stitching of the laser treatment segments;
∘ the iteration starts with a segment size covering the whole surface area of the 3D object to be treated, and the size is iteratively reduced step-by-step by dividing the size of a previous iteration step until all tessellation segments do not exceed the maximum dimensions but ensure that the number of the tessellation segments to be treated by a laser is minimal;
▪ linkage the patterning CAD file data with the tessellation segments by;
∘ merging coordinate systems of the 3D CAD data from the 3D object and patterning files;
∘ partitioning the pattering 3D CAD data based on vertices and edges of the 3D object tessellation segments adjusted to the same area on the surface of the 3D object;
▪ creation a workflow algorithm of how all tessellation segments of the 3D object are laser-treated by a computer-implemented iteration method, wherein:
∘ all tessellation segments of the 3D object surface to be laser-treated are arranged in a queue, and the repositioning time is estimated based on performance parameters of the positioning stages, comprising acceleration and positioning speed;
∘ the repositioning time is iteratively minimised by prioritising use of faster stages and shorter distances;
▪ creation a workflow algorithm of how all loaded 3D objects are laser-treated within a single process cycle by a computer-implemented iteration method, wherein:
∘ the queue of the tessellation segments to be laser-treated is multiplied for all 3D objects on the platform including relative position and orientation of the 3D objects on the platform;
∘ accessibility of the tessellation segments to be treated by the laser beam is checked virtually, avoiding shadowing from neighbouring 3D objects on the platform when the laser beam is tilted for processing inclined parts of the surface;
∘ the tessellation segments to be laser-treated belonging to different 3D objects on the platform but fitting into the same virtual 3D working volume (limited by the working field provided by the two-mirror galvoscanner and the working range of the dynamic focusing unit are merged together;
• the focused laser beam is treating all tessellation segments of all 3D objects (7) on the platform (9) with according to a queue of the tessellation segments based on computer-simulated workflow, optimised for the shortest process cycle, wherein:
▪ the treatment of the pattern on any tessellation segment is performed utilising fast motion of the galvoscanner and the dynamic focusing unit, wherein the scan speed of the galvoscanner is higher than linear positioning stages.

15. The system for batch processing of identical 3D-shaped objects by laser treatment, according to claim 14, **characterised in that** the control unit is configured such that the required energy density (fluence) on the surface of the 3D object (7) to be treated is preserved within the process window by adjusting the laser pulse energy utilising an attenuator based on acoustic-optical or electro-optical modulation.

16. The system for batch processing of identical 3D-shaped objects by laser treatment according to claim 14, **characterised in that** the dynamic focusing unit (5) comprises means for shifting focal position along the beam propagation direction, based on galvanometric, piezoelectric or liquid lens techniques, wherein the focal shift speed of the galvanometric, piezoelectric or liquid lens techniques is higher than linear positioning stage.

17. The system for batch processing of identical 3D-shaped objects by laser treatment, according to claim 14, **characterised in that** the control unit is configured such that during the laser treatment within the virtual three-dimensional working volume, at least one linear mechanical axis, preferable Y1, is synchronous moving at a constant speed, expanding the three-dimensional working window to the length of the positioning stage Y1 and eliminating repositioning time of the platform in at least one direction.

## Patentansprüche

1. Verfahren für eine Stapelverarbeitung von identischen 3D-förmigen Objekten durch Laserbehandlung, umfassend:
∘ Laden eines Stapels von identischen 3D-Objekten in eine Laserbearbeitungsmaschine;
∘ Laden eines 3D-CAD-Modells des Objekts;
∘ Partitionieren der Oberfläche des 3D-Objekts in mehrere Tesselierungssegmente, die durch Abmessungen eines Arbeitsfelds begrenzt werden, das durch einen Zweispiegel-Galvoscanner mit einem Objektiv bereitgestellt wird;
∘ Laden einer CAD-Datei eines Musters, das mit einem Laserstrahl auf der Oberfläche des 3D-Objekts behandelt werden soll;
∘ Verknüpfen der Bemusterungs-CAD-Dateidaten mit den Tesselierungssegmenten;
∘ Erstellen eines Arbeitsablauf-Algorithmus, wie alle Tesselierungssegmente des 3D-Objekts laserbehandelt werden;
∘ Erstellen eines Arbeitsablauf-Algorithmus, wie alle geladenen 3D-Objekte in einem einzigen Prozesszyklus laserbehandelt werden;
∘ Behandeln aller 3-D-Objekte mit dem fokussieren Laserstrahl gemäß der Bemusterungs-CAD-Datei und den Arbeitsablauf-Algorithmen, wobei:
▪ Position und Richtung des fokussierten Laserstrahls relativ zu dem 3D-Objekt während der Laserbehandlung durch Verwenden der automatisierten Laserbearbeitungsmaschine mit mindestens drei linearen Positionierungsstufen, zwei Rotationsstufen, dem Zweispiegel-Galvoscanner gesteuert werden;
**dadurch gekennzeichnet, dass**
• ein gleichzeitiges Laden des Stapels von identischen 3D-Objekten (7) in die Laserbearbeitungsmaschine auf einer Plattform mit einem Mittel zum Drehen der Plattform um eine Vertikalstufe in der Laserbearbeitungsmaschine durchgeführt wird, wobei:
▪ die Plattform zur Platzierung von mehreren 3D-Objekten auf Grundlage der Symmetrie des 3D-Objekts und der mechanischen Einschränkungen der Laserbearbeitungsmaschine ausgelegt ist, die einen Verfahrweg der Stufen und ihrer relativen Lage umfassen;
▪ Verlagerung und Ausrichtung der 3D-Objekte auf der Plattform durch Verwenden eines durch einen Computer implementierten numerischen Iterationsverfahrens optimiert werden, um die Anzahl von Plattform-Neupositionierungen während der Laserbehandlung aller 3D-Objekte auf der Plattform zu minimieren;
▪ die zu behandelnden 3D-Objekte in einer vordefinierten Position und Ausrichtung jedes 3D-Objekts auf der Plattform angebracht werden;
• Prüfen der Ausrichtung und Position jedes 3D-Objekts auf der Plattform durchgeführt wird, nach dem Laden der Plattform in die Laserbearbeitungsmaschine durch ein dediziertes Visionssystem implementiert worden ist, um eine Fehlausrichtung der Objekte von der vordefinierten Position und Ausrichtung zu messen, wobei
▪ die Fehlausrichtung jedes 3D-Objekts relativ zu der vordefinierten Position und Ausrichtung des 3D-Objekts auf der Plattform als Korrekturdaten angewendet wird, um die Ausrichtung und Position der Bemusterungs-CAD relativ zu dem 3D-Objekt während der Laserbehandlung zu modifizieren,
• Partitionieren der Oberfläche des 3D-Objekts in die Tesselierungssegmente durch Verwenden eines durch einen Computer implementierten Iterationsverfahrens durchgeführt wird, wobei
▪ das Partitionieren auf Grundlage des 3D-CAD-Modells des 3D-Objekts erzielt wird, wobei die Formen und Positionen einer Vielzahl von Tesselierungssegmenten berechnet werden;
▪ die maximalen Abmessungen jedes Tesselierungssegments durch ein virtuelles dreidimensionales Arbeitsvolumen definiert werden, das durch das Arbeitsfeld begrenzt wird, das durch den Zweispiegel-Galvoscanner und einen Arbeitsbereich eines Mittels zum dynamischen Fokaldistanzmanagement bereitgestellt wird;
▪ die maximalen Abmessungen jedes Tesselierungssegments zusätzlich durch ein Laserprozessparameter-Fenster begrenzt werden, das den Bereich von zulässigen Veränderungen der Laserstrahlgröße und Energiedichte (Fluenz) auf der Oberfläche des 3D-Objekts aufgrund von Fokusversatz und des Strahleinfallswinkels umfasst, die experimentell definiert und von einem bestimmten Typ von Laserbehandlung und Material des 3D-Objekts abhängig sind;
▪ die maximalen Abmessungen jedes Tesselierungssegments durch den Überlappungsabstand reduziert werden, wenn die jeweilige Laserbehandlung ein Überlappen zwischen den aneinander angrenzenden Tesselierungssegmenten erfordert, um eine gleichmäßige Oberflächenbehandlung oder nahtlose Nähte der Laserbehandlungssegmente zu erhalten;
▪ die Wiederholung mit einer Segmentgröße beginnt, die den gesamten Oberflächenbereich des zu behandelnden 3D-Objekts abdeckt, und die Größe schrittweise durch wiederholtes Teilen der Größe eines vorherigen Iterationsschritts reduziert wird, bis alle Tesselierungssegmente die maximalen Abmessungen nicht mehr überschreiten, wobei sichergestellt wird, dass die Anzahl der mit einem Laser zu behandelnden Tesselierungssegmente minimal ist;
• Verknüpfen der Bemusterungs-CAD-Dateidaten mit den Tesselierungssegmenten durch Folgendes durchgeführt wird:
▪ Zusammenführen der Koordinatensysteme der 3D-CAD-Daten von dem 3D-Objekt und den Bemusterungsdateien;
▪ Partitionieren der Bemusterungs-3D-CAD-Daten auf Grundlage von Scheitelpunkten und Kanten der 3D-Objekt-Tesselierungssegmente, die an denselben Bereich auf der Oberfläche des 3D-Objekts angepasst sind;
• Erstellen eines Arbeitsablauf-Algorithmus, wie alle Tesselierungssegmente des 3D-Objekts laserbehandelt werden, durch ein durch einen Computer implementiertes Iterationsverfahren, wobei:
▪ alle Tesselierungssegmente der mit einem Laser zu behandelnden 3D-Objektoberfläche in einer Warteschlange angeordnet werden, und die Neupositionierungszeit auf Grundlage von Leistungsparametern der Positionierungsstufen geschätzt wird, die Beschleunigung und Positionierungsgeschwindigkeit umfassen;
▪ die Neupositionierungszeit iterativ durch Priorisieren des Verwendens von schnelleren Stufen und kürzeren Abständen minimiert wird;
• Erstellen eines Arbeitsablauf-Algorithmus, wie alle geladenen 3D-Objekte in einem einzigen Prozesszyklus laserbehandelt werden, durch ein durch einen Computer implementiertes Iterationsverfahren durchgeführt wird, wobei:
▪ die Warteschlange der mit einem Laser zu behandelnden Tesselierungssegmente für alle 3D-Objekte auf der Plattform multipliziert wird, einschließlich relativer Position und Ausrichtung der 3D-Objekte auf der Plattform;
▪ Zugänglichkeit der durch den Laserstrahl zu behandelnden Tesselierungssegmente virtuell geprüft wird, wobei eine Schattenbildung von benachbarten 3D-Objekten auf der Plattform vermieden wird, wenn der Laserstrahl zum Bearbeiten von geneigten Teilen der Oberfläche geneigt wird;
▪ die mit einem Laser zu behandelnden Tesselierungssegmente, die zu verschiedenen 3D-Objekten auf der Plattform gehören, aber in dasselbe virtuelle 3D-Arbeitsvolumen passen (das durch das Arbeitsfeld begrenzt wird, das durch den Zweispiegel-Galvoscanner und den Arbeitsbereich des Mittels zum dynamischen Fokaldistanzmanagement bereitgestellt wird) zusammengeführt werden;
• Behandeln aller 3D-Objekte mit dem fokussierten Laserstrahl entsprechend einer Warteschlange von mit einem Laser zu behandelnden Tesselierungssegmenten durchgeführt wird, wobei:
▪ die Behandlung des Musters auf einem beliebigen Tesselierungssegment durch Einsetzen des Galvoscanners, der eine Positionierungsgeschwindigkeit aufweist, die höher als die Geschwindigkeit der linearen Stufen ist, und des dynamischen Fokaldistanzmanagement-Mittels durchgeführt wird.

2. Verfahren nach Anspruch 1, **dadurch gekennzeichnet, dass** Partitionieren des 3D-Objekts in die Tesselierungssegmente im Voraus durchgeführt wird, bevor eine Auslegung der Plattform zum Fixieren von mehreren 3D-Objekten erstellt wird.

3. Verfahren nach Anspruch 1, **dadurch gekennzeichnet, dass** Partitionieren des 3D-Objekts in die Tesselierungssegmente auf den Oberflächenbereich des 3D-Objekts begrenzt ist, wo die Laserbehandlung auf Grundlage der Bemusterungs-3D-CAD-Daten durchgeführt werden soll.

4. Verfahren nach Anspruch 1, **dadurch gekennzeichnet, dass** die Laserbehandlung mindestens eines von einer Lasertexturierung, Laseroberflächenmodifizierung, Laserpolitur und/oder Lasergravur umfasst.

5. Verfahren nach Anspruch 1, **dadurch gekennzeichnet, dass** die Parameter des Laserbehandlungsprozessfensters mindestens durch eines von Laserenergiedichte (Fluenz) in J/cm², Laserstrahlungsdosis in J/cm² und/oder Laserintensität in W/cm² definiert sind, die von der Laserbehandlung abhängen.

6. Verfahren nach Anspruch 1, **dadurch gekennzeichnet, dass** die Energiedichte (Fluenz) auf der zu behandelnden Oberfläche des 3D-Objekts, die für die Laserbehandlung erforderlich ist, in dem Prozessfenster durch Einstellen der Laserpulsenergie gemäß den 3d-CAD-Daten und dem geschätzten Stahleinfallswinkel auf die Oberfläche des 3D-Objekts und einem Fokusversatz von der Oberfläche an der aktuellen Laserbehandlungsposition beibehalten wird.

7. Verfahren nach Anspruch 1, **dadurch gekennzeichnet, dass** eine Aufbringung der Laserstrahlungsdosis während der Laserstrahl-Scanning über das Muster aufrechterhalten wird, um eine Wärmeakkumulation auf der Oberfläche des 3D-Objekts zu vermeiden.

8. Verfahren nach Anspruch 7, **dadurch gekennzeichnet, dass** die Aufbringung der Laserstrahlungsdosis während der Laserstrahl-Scanning über das Muster durch den Ansatz der Verflechtung von Puls und Abtastzeile beibehalten wird, und die erforderliche Strahlungsdosis durch Verwenden von einigen aufeinanderfolgenden Scans über denselben Oberflächenbereich erzielt wird.

9. Verfahren nach Anspruch 1, **dadurch gekennzeichnet, dass** die Bemusterungs-CAD-Datei eine mit einem Laserstrahl auf die gesamte Oberfläche des 3D-Objekts zu schreibende Textur enthält.

10. Verfahren nach Anspruch 1, **dadurch gekennzeichnet, dass** die Bemusterungs-CAD-Datei ein Texturelement enthält, das gleichmäßig auf der Oberfläche des 3D-Objekts wiederholt werden soll.

11. Verfahren nach Anspruch 1, **dadurch gekennzeichnet, dass** die Bemusterungs-CAD-Datei elektrische Schaltungsauslegungsdaten enthält, die mit einem Laserstrahl auf die Oberfläche des 3D-Objekts geschrieben werden sollen.

12. Verfahren nach Anspruch 1, **dadurch gekennzeichnet, dass** die Laserbehandlung die Muster einer elektrischen Schaltung auf dielektrische Materialien für eine selektive stromlose Metallisierung mit einem Laser schreibt.

13. Verfahren nach einem der vorhergehenden Ansprüche, **dadurch gekennzeichnet, dass** zu dem Positionierungssystem gesendete Daten durch eine durch einen Computer implementierte Verarbeitungssoftware korrigiert werden, um die Musterverzerrungen aufgrund der Musterprojektion auf konkave und konvexe gekrümmte oder geneigte Teile auf der Oberfläche des 3D-Objekts auszugleichen.

14. System zur Stapelverarbeitung von identischen Objekten mit 3D-Form (7) durch Laserbehandlung, umfassend:
∘ eine lineare Positionierungsstufe X1, die horizontal an einer Basis (10) fixiert ist;
∘ eine lineare Positionierungsstufe Y1, die horizontal auf einem sich bewegenden Teil der linearen Positionierungsstufe X1 senkrecht zu ihrer Bewegung montiert ist;
∘ eine Rotationsstufe A, die auf einem sich bewegenden Teil der linearen Positionierungsstufe Y1 montiert ist;
∘ eine lineare Positionierungsstufe Z1, die vertikal auf einer Tragstruktur (11) über den Stufen X1, Y1 und A montiert ist;
∘ eine Rotationsstufe B, die auf einem sich bewegenden Teil der linearen Positionierungsstufe Z1 montiert ist;
∘ eine Zweiachsen-Strahlablenkungsvorrichtung (3) mit Laserstrahl-Scanning in X2- und Y2-Richtung, bevorzugt ein Galvoscanner, die auf der Rotationsstufe B montiert ist, wobei die Scan-Geschwindigkeit des Galvoscanners höher als die Geschwindigkeit der linearen Positionierungsstufen ist;
∘ einen Laser (1), eine Strahlführungsoptik (2) und eine dynamische Fokussiereinheit (5), die auf der Tragstruktur montiert sind, wobei:
▪ der Laserstrahl durch die Führungsoptik (2) zu der dynamischen Fokussiereinheit (5) und weiter zu dem Galvoscanner (3) übertragen werden kann;
▪ eine f-theta Fokussiersobjektivlinse (4), die an dem Galvoscanner (3) angebracht ist, den Laserstrahl auf einen Fokuspunkt an einer Fokusposition fokussieren kann;
▪ der Galvoscanner (3) die Richtung des Laserstrahls in einem zweidimensional Feld ablenken kann, das durch die Brennweite des f-theta-Objektivs definiert wird;
▪ Die Fokusposition entlang der Strahlausbreitungsrichtung durch die dynamische Fokussiereinheit (5) gesteuert werden kann;
▪ die Richtung des fokussierten Laserstrahls durch die Rotationsstufe B um eine horizontale Achse geneigt werden kann;
∘ eine Steuereinheit bereitgestellt wird, wobei die Steuereinheit sämtliche Systemkomponenten, umfassend Betrieb des Lasers, Bewegung, Position und Ausrichtung aller Positionierungs- und Rotationsstufen, Betrieb des Galvoscanners und der dynamischen Fokussiereinheit gemäß einem Prozessalgorithmus verwaltet;
**dadurch gekennzeichnet, dass**
• das System mit einer Plattform (9) zum Platzieren einer Vielzahl von 3D-Objekten (7) bereitgestellt wird, die durch den Laserstrahl behandelt werden sollen, wobei:
▪ die Plattform (9) zur Platzierung von mehreren 3D-Objekten (7) auf Grundlage der Symmetrie des 3D-Objekts und mechanischer Einschränkungen der Laserbearbeitungsmaschine konfiguriert ist, die einen Verfahrweg der Stufen (X1, Y1, Z1, A, B) und ihrer relativen Lage umfassen;
• die Plattform (9) an einer definierten Position und in einer definierten Ausrichtung an der Rotationsstufe A angebracht ist;
• auf der Plattform (9) Referenzmarkierungen für eine Kalibrierung der Position und Ausrichtung des 3D-Objekts (7) vorhanden sind;
• ein Visionssystem (6), das auf der Tragstruktur (11) über der Plattform fixiert ist, konfiguriert, um Bilder der Plattform mit den 3D-Objekten (7) nach Laden der Plattform in die Laserbearbeitungsmaschine aufzunehmen, wobei:
▪ eine Bilderkennungs-Software konfiguriert ist, um die Positionen und Ausrichtung aller auf der Plattform (9) platzierten 3D-Objekte (7) relativ zu den Referenzmarkierungen mit dem Plattformauslegungs-CAD zu vergleichen, das Informationen über Lagen und Ausrichtungen der 3D-Objekte enthält;
▪ ferner konfiguriert ist, um die gemessene Fehlausrichtung jedes 3D-Objekts relativ zu der vordefinierten Position und Ausrichtung des 3D-Objekts auf der Plattform (9) als Korrekturdaten zu verwenden, um die Ausrichtung und Position der Bemusterungs-CAD relativ zu dem 3D-Objekt während der Laserbehandlung zu modifizieren,
• die Steuereinheit konfiguriert ist, automatisch Folgendes durchzuführen:
▪ Partitionieren der Oberfläche des 3D-Objekts in die Tesselierungssegmente durch Verwenden eines durch einen Computer implementierten Iterationsverfahrens, wobei:
∘ das Partitionieren auf Grundlage des 3D-CAD-Modells des in die Steuereinheit geladenen 3D-Objekts erzielt wird, wobei die Formen und Positionen einer Vielzahl von Tesselierungssegmenten berechnet werden;
∘ die maximalen Abmessungen jedes Tesselierungssegments durch ein virtuelles dreidimensionales Arbeitsvolumen definiert werden, das durch das Arbeitsfeld begrenzt wird, das durch den Zweispiegel-Galvoscanner und einen Arbeitsbereich der dynamischen Fokussiereinheit bereitgestellt wird;
∘ die maximalen Abmessungen jedes Tesselierungssegments zusätzlich durch ein Laserprozessparameter-Fenster begrenzt werden, das den Bereich von zulässigen Veränderungen der Laserstrahlgröße und Energiedichte (Fluenz) auf der Oberfläche des 3D-Objekts aufgrund von Fokusversatz und des Strahleinfallswinkels umfasst, die experimentell definiert und von einem bestimmten Typ von Laserbehandlung und Material des 3D-Objekts abhängig sind;
∘ die maximalen Abmessungen jedes Tesselierungssegments durch den Überlappungsabstand reduziert werden, wenn die jeweilige Laserbehandlung ein Überlappen zwischen den aneinander angrenzenden Tesselierungssegmenten erfordert, um eine gleichmäßige Oberflächenbehandlung oder nahtlose Nähte der Laserbehandlungssegmente zu erhalten;
∘ die Wiederholung mit einer Segmentgröße beginnt, die den gesamten Oberflächenbereich des zu behandelnden 3D-Objekts abdeckt, und die Größe schrittweise durch wiederholtes Teilen der Größe eines vorherigen Wiederholungsschritts reduziert wird, bis alle Tesselierungssegmente die maximalen Dimensionen nicht mehr überschreiten, wobei sichergestellt wird, dass die Anzahl der mit einem Laser zu behandelnden Tesselierungssegmente minimal ist;
▪ Verknüpfen der Bemusterungs-CAD-Dateidaten mit den Tesselierungssegmenten durch:
∘ Zusammenführen der Koordinatensysteme der 3D-CAD-Daten von dem 3D-Objekt und den Bemusterungsdateien;
∘ Partitionieren der Bemusterungs-3D-CAD-Daten auf Grundlage von Scheitelpunkten und Kanten der 3D-Objekt-Tesselierungssegmente, die an denselben Bereich auf der Oberfläche des 3D-Objekts angepasst sind;
▪ Erstellen eines Arbeitsablauf-Algorithmus, wie alle Tesselierungssegmente des 3D-Objekts laserbehandelt werden, durch ein durch einen Computer implementiertes Iterationsverfahren, wobei:
∘ alle Tesselierungssegmente der mit einem Laser zu behandelnden 3D-Objektoberfläche in einer Warteschlange angeordnet werden, und die Neupositionierungszeit auf Grundlage von Leistungsparametern der Positionierungsstufen geschätzt wird, die Beschleunigung und Positionierungsgeschwindigkeit umfassen;
∘ die Neupositionierungszeit iterativ durch Priorisieren des Verwendens von schnelleren Stufen und kürzeren Abständen minimiert wird;
▪ Erstellen eines Arbeitsablauf-Algorithmus, wie alle geladenen 3D-Objekte in einem einzigen Prozesszyklus laserbehandelt werden, durch ein durch einen Computer implementiertes Iterationssverfahren, wobei;
∘ die Warteschlange der mit einem Laser zu behandelnden Tesselierungssegmente für alle 3D-Objekte auf der Plattform multipliziert wird, einschließlich relativer Position und Ausrichtung der 3D-Objekte auf der Plattform;
∘ Zugänglichkeit der durch den Laserstrahl zu behandelnden Tesselierungssegmente virtuell geprüft wird, wobei eine Schattenbildung von benachbarten 3D-Objekten auf der Plattform vermieden wird, wenn der Laserstrahl zum Bearbeiten von geneigten Teilen der Oberfläche geneigt wird;
∘ die mit einem Laser zu behandelnden Tesselierungssegmente, die zu verschiedenen 3D-Objekten auf der Plattform gehören, aber in dasselbe virtuelle 3D-Arbeitsvolumen passen (das durch das Arbeitsfeld begrenzt wird, das durch den Zweispiegel-Galvoscanner und den Arbeitsbereich der dynamischen Fokussiereinheit bereitgestellt wird) zusammengeführt werden;
• der fokussierte Laserstrahl alle Tesselierungssegmente aller 3D-Objekte (7) auf der Plattform (9) gemäß einer Warteschlange der Tesselierungssegmente auf Grundlage eines durch einen Computer simulierten Arbeitsablaufs behandelt, der für den kürzesten Prozesszyklus optimiert ist, wobei:
▪ die Behandlung des Musters auf einem beliebigen Tesselierungssegment durch Einsetzen einer Bewegung des Galvoscanners und der dynamischen Fokussiereinheit durchgeführt wird, wobei die Scan-Geschwindigkeit des Galvoscanners höher als lineare Positionierungsstufen ist.

15. System zur Stapelverarbeitung von identischen Objekten mit 3D-Form durch Laserbehandlung nach Anspruch 14, **dadurch gekennzeichnet, dass** die Steuereinheit so konfiguriert ist, dass die erforderliche Energiedichte (Fluenz) auf der Oberfläche des zu behandelnden 3D-Objekts (7) in dem Prozessfenster beibehalten wird, indem die Laserpulsenergie durch Einsetzen einer Dämpfungseinrichtung auf Grundlage einer akusto-optischen oder elektro-optischen Modulation angepasst wird.

16. System zur Stapelverarbeitung von identischen Objekten mit 3D-Form durch Laserbehandlung nach Anspruch 14, **dadurch gekennzeichnet, dass** die dynamische Fokussiereinheit (5) Mittel zum Verschieben einer Fokusposition entlang der Strahlausbreitungsrichtung auf Grundlage von galvanometrischen, piezoelektrischen oder Flüssiglinsen-Techniken umfasst, wobei die Fokusverschiebungsgeschwindigkeit der galvanometrischen, piezoelektrischen oder Flüssiglinsen-Techniken höher als eine lineare Positionierungsstufe ist.

17. System zur Stapelverarbeitung von identischen Objekten mit 3D-Form durch Laserbehandlung nach Anspruch 14, **dadurch gekennzeichnet, dass** die Steuereinheit so konfiguriert ist, dass sich während der Laserbehandlung in dem virtuellen dreidimensionalen Arbeitsvolumen mindestens eine lineare mechanische Achse, bevorzugt Y1, synchron mit einer konstanten Geschwindigkeit bewegt, wobei das dreidimensionale Arbeitsfenster auf die Länge der Positionierungsstufe Y1 erweitert wird und die Neupositionierungszeit der Plattform in mindestens eine Richtung entfällt.

## Revendications

1. Procédé de traitement par lots d'objets de forme 3D identiques par traitement au laser comprenant :
∘ le chargement d'un lot d'objets 3D identiques dans une machine de traitement au laser ;
∘ le chargement d'un modèle CAO 3D de l'objet ;
∘ le partitionnement de la surface de l'objet 3D en de multiples segments de tessellation limités par les dimensions d'un champ de travail fourni par un scanner galvanique à deux miroirs doté d'un objectif ;
∘ le chargement d'un fichier CAO d'un motif, devant être traité par un faisceau laser sur la surface de l'objet 3D ;
∘ la mise en relation des données du fichier CAO de création de motifs avec les segments de tessellation ;
∘ la création d'un algorithme de flux de travail sur la façon dont tous les segments de tessellation de l'objet 3D sont traités au laser ;
∘ la création d'un algorithme de flux de travail sur la façon dont tous les objets 3D chargés sont traités au laser au cours d'un seul cycle de processus ;
∘ le traitement de tous les objets 3D avec le faisceau laser focalisé conformément au fichier CAO de création de motifs et aux algorithmes de flux de travail :
▪ la position et la direction du faisceau laser focalisé par rapport à l'objet 3D étant commandées pendant le traitement au laser à l'aide de la machine de traitement au laser automatisée dotée d'au moins trois platines de positionnement linéaire, deux platines de rotation et un scanner galvanique à deux miroirs ;
**caractérisé en ce que**
• le chargement simultané du lot d'objets 3D identiques (7) dans la machine de traitement au laser est effectué sur une plateforme qui comporte un moyen permettant de faire tourner la plateforme autour d'une platine verticale à l'intérieur de la machine de traitement au laser :
▪ ladite plateforme destinée au placement de multiples objets 3D étant conçue sur la base de la symétrie de l'objet 3D et des contraintes mécaniques de la machine de traitement au laser comprenant la plage de déplacement des platines et leur emplacement relatif ;
▪ la dislocation et l'orientation des objets 3D sur la plateforme étant optimisées à l'aide d'une méthode d'itération numérique mise en oeuvre par ordinateur permettant de minimiser le nombre de repositionnements de plateforme pendant le traitement au laser de tous les objets 3D sur la plateforme ;
▪ lesdits objets 3D devant être traités étant fixés à la plateforme dans une position et une orientation prédéfinies de chaque objet 3D ;
• la vérification de l'orientation et de la position de chaque objet 3D sur la plateforme est effectuée après le chargement de la plateforme dans la machine de traitement au laser et est mise en oeuvre par un système de vision dédié permettant de mesurer le défaut d'alignement des objets par rapport à la position et à l'orientation prédéfinies,
▪ ledit défaut d'alignement de chaque objet 3D par rapport à la position et à l'orientation prédéfinies de l'objet 3D sur la plateforme étant appliqué en tant que données de correction de manière à modifier l'orientation et la position CAO de création de motifs par rapport à l'objet 3D pendant le traitement au laser,
• le partitionnement de la surface de l'objet 3D en segments de tessellation est effectué à l'aide d'une méthode d'itération mise en oeuvre par ordinateur,
▪ ledit partitionnement étant obtenu sur la base du modèle CAO 3D de l'objet 3D, en calculant les formes et les positions d'une pluralité de segments de tessellation ;
▪ les dimensions maximales de chaque segment de tessellation étant définies par un volume de travail tridimensionnel virtuel limité par le champ de travail fourni par le scanner galvanique à deux miroirs et une plage de travail d'un moyen de gestion dynamique de la distance focale ;
▪ lesdites dimensions maximales de chaque segment de tessellation étant de plus limitées par une fenêtre de paramètres de processus laser comprenant la plage de variations autorisées de la taille et de la densité d'énergie (fluence) du faisceau laser sur la surface de l'objet 3D en raison du décalage de focalisation et de l'angle d'incidence du faisceau, définis expérimentalement et dépendants du type particulier de traitement au laser et du matériau de l'objet 3D ;
▪ lesdites dimensions maximales de chaque segment de tessellation étant réduites de la distance de chevauchement lorsque le traitement au laser particulier nécessite un chevauchement entre les segments de tessellation adjacents pour obtenir un traitement de surface uniforme ou un assemblage sans soudure des segments de traitement au laser ;
▪ l'itération commençant avec une taille de segment couvrant toute la superficie de l'objet 3D devant être traitée, et ladite taille étant réduite de manière itérative étape par étape en divisant la taille d'une étape d'itération précédente jusqu'à ce que tous les segments de tessellation ne dépassent pas les dimensions maximales mais garantissent que le nombre de segments de tessellation devant être traités par un laser soit minimal ;
• la mise en relation des données du fichier CAO de création de motifs avec les segments de tessellation est effectuée par :
▪ fusion des systèmes de coordonnées des données CAO 3D provenant de l'objet 3D et des fichiers de création de motifs ;
▪ partitionnement des données CAO 3D de création de motifs sur la base de sommets et de bords des segments de tessellation d'objet 3D ajustés à la même zone sur la surface de l'objet 3D ;
• la création d'un algorithme de flux de travail sur la façon dont tous les segments de tessellation de l'objet 3D sont traités au laser est réalisée par une méthode d'itération mise en oeuvre par ordinateur :
▪ tous lesdits segments de tessellation de la surface de l'objet 3D devant être traités au laser étant disposés dans une file d'attente, et ledit temps de repositionnement étant estimé en fonction des paramètres de performance des platines de positionnement, comprenant l'accélération et la vitesse de positionnement ;
▪ ledit temps de repositionnement étant minimisé de manière itérative en donnant la priorité à l'utilisation des platines plus rapides et des distances plus courtes ;
• la création d'un algorithme de flux de travail sur la façon dont tous les objets 3D chargés sont traités au laser au cours d'un seul cycle de processus est effectuée par une méthode d'itération mise en oeuvre par ordinateur :
▪ ladite file d'attente des segments de tessellation devant être traités au laser étant multipliée pour tous les objets 3D sur la plateforme, y compris la position et l'orientation relatives des objets 3D sur la plateforme ;
▪ l'accessibilité des segments de tessellation devant être traités par le faisceau laser étant vérifiée virtuellement, évitant ainsi l'ombre des objets 3D voisins sur la plateforme lorsque le faisceau laser est incliné pour traiter les parties inclinées de la surface ;
▪ lesdits segments de tessellation devant être traités au laser appartenant à des objets 3D différents sur la plateforme mais s'insérant dans un même volume de travail 3D virtuel (limité par le champ de travail fourni par le scanner galvanique à deux miroirs et la plage de travail du moyen de gestion dynamique de la distance focale) étant fusionnés ensemble ;
• le traitement de tous les objets 3D avec le faisceau laser focalisé est effectué en fonction d'une file d'attente des segments de tessellation devant être traités au laser :
▪ ledit traitement du motif sur tout segment de tessellation étant effectué à l'aide du scanner galvanométrique, présentant une vitesse de positionnement supérieure à la vitesse des platines linéaires, et du moyen de gestion dynamique de la distance focale.

2. Procédé selon la revendication 1, **caractérisé en ce que** le partitionnement de l'objet 3D en segments de tessellation est effectué à l'avance, avant de préparer une conception de la plateforme destinée à fixer de multiples objets 3D.

3. Procédé selon la revendication 1, **caractérisé en ce que** le partitionnement de l'objet 3D en segments de tessellation se limite à la superficie de l'objet 3D où le traitement au laser doit être effectué sur la base des données CAO 3D de création de motifs.

4. Procédé selon la revendication 1, **caractérisé en ce que** le traitement au laser comprend au moins une opération parmi la texturation au laser, la modification de surface au laser, le polissage au laser et la gravure au laser.

5. Procédé selon la revendication 1, **caractérisé en ce que** les paramètres de fenêtre du processus de traitement au laser sont définis au moins par une propriété parmi la densité d'énergie laser (fluence) en J/cm², la dose d'irradiation laser en J/cm² ou l'intensité laser en W/cm² en fonction du traitement au laser.

6. Procédé selon la revendication 1, **caractérisé en ce que** la densité d'énergie (fluence) sur la surface de l'objet 3D devant être traitée, requise pour le traitement au laser, est préservée dans la fenêtre de processus en ajustant l'énergie d'impulsion laser en fonction des données CAO 3D et l'angle d'incidence du faisceau estimé par rapport à la surface de l'objet 3D et un décalage de focalisation de la surface dans la position de traitement au laser courante.

7. Procédé selon la revendication 1, **caractérisé en ce que** le dépôt de la dose d'irradiation laser pendant le balayage du faisceau laser sur le motif est maintenu pour éviter l'accumulation de chaleur à la surface de l'objet 3D.

8. Procédé selon la revendication 7, **caractérisé en ce que** le dépôt de la dose d'irradiation laser pendant le balayage du faisceau laser sur le motif est maintenu par l'approche par entrelacement d'impulsions et de lignes de balayage, et la dose d'irradiation requise est obtenue à l'aide de quelques balayages consécutifs sur la même superficie.

9. Procédé selon la revendication 1, **caractérisé en ce que** le fichier CAO de création de motifs contient une texture devant être écrite par un faisceau laser sur toute la surface de l'objet 3D.

10. Procédé selon la revendication 1, **caractérisé en ce que** le fichier CAO de création de motifs contient un élément de texture devant être répété uniformément sur la surface de l'objet 3D.

11. Procédé selon la revendication 1, **caractérisé en ce que** le fichier CAO de création de motifs contient des données de conception de circuit électrique devant être écrites par un faisceau laser sur la surface de l'objet 3D.

12. Procédé selon la revendication 1, **caractérisé en ce que** le traitement au laser consiste à écrire au laser les motifs d'un circuit électrique sur des diélectriques pour une métallisation autocatalytique sélective.

13. Procédé selon l'une quelconque des revendications précédentes, **caractérisé en ce que** les données envoyées au système de positionnement sont corrigées par un logiciel de traitement mis en oeuvre par ordinateur de manière à compenser les distorsions de motif dues à la projection du motif sur les parties courbes ou inclinées concaves et convexes de la surface de l'objet 3D.

14. Système de traitement par lots d'objets de forme 3D identiques (7) par traitement au laser comprenant :
∘ une platine de positionnement linéaire X1, fixée horizontalement à une base (10) ;
∘ une platine de positionnement linéaire Y1, montée horizontalement sur une partie mobile de la platine de positionnement linéaire X1 perpendiculairement à son déplacement ;
∘ une platine de rotation A, montée sur une partie mobile de la platine de positionnement linéaire Y1 ;
∘ une platine de positionnement linéaire Z1, montée verticalement sur une structure support (11) au-dessus des platines X1, Y1 et A ;
∘ une platine de rotation B, montée sur une partie mobile de la platine de positionnement linéaire Z1 ;
∘ un dispositif de déviation de faisceau à deux axes (3) avec balayage du faisceau laser dans les directions X2 et Y2, de préférence un scanner galvanique, monté sur la platine de rotation B, la vitesse de balayage du scanner galvanique étant supérieure à la vitesse des platines de positionnement linéaire ;
∘ un laser (1), une optique de distribution de faisceau (2) et une unité de focalisation dynamique (5), montés sur la structure support :
▪ ledit faisceau laser pouvant être transmis par l'intermédiaire de l'optique de distribution (2) à l'unité de focalisation dynamique (5) puis au scanner galvanique (3) ;
▪ une lentille d'objectif de focalisation f-thêta (4) fixée au scanner galvanique (3) pouvant focaliser le faisceau laser sur un point de focalisation au niveau d'une position focale ;
▪ ledit scanner galvanique (3) pouvant dévier la direction du faisceau laser à l'intérieur d'un champ bidimensionnel, défini par la distance focale de l'objectif f-thêta ;
▪ ladite position focale le long de la direction de propagation du faisceau pouvant être commandée par l'unité de focalisation dynamique (5) ;
▪ ladite direction du faisceau laser focalisé pouvant être inclinée autour d'un axe horizontal par la platine de rotation B ;
∘ une unité de commande est pourvue, ladite unité de commande gérant tous les composants du système, comprenant le fonctionnement du laser, le déplacement, la position et l'orientation de toutes les platines de positionnement et de rotation, le fonctionnement du scanner galvanique et de l'unité de focalisation dynamique, conformément à un algorithme de processus ;
**caractérisé en ce que**
• le système est pourvu d'une plateforme (9) destinée au placement d'une pluralité d'objets 3D (7) devant être traités par le faisceau laser :
▪ ladite plateforme (9) destinée au placement de multiples objets 3D (7) étant conçue sur la base de la symétrie de l'objet 3D et des contraintes mécaniques de la machine de traitement au laser comprenant la plage de déplacement des platines (X1, Y1, Z1, A, B) et leur emplacement relatif ;
• la plateforme (9) est fixée à la platine de rotation A dans une position et une orientation définies ;
• la plateforme (9) comporte des marques de référence sur elle pour l'étalonnage de la position et de l'orientation de l'objet 3D (7) sur celle-ci ;
• un système de vision (6), fixé sur la structure support (11) au-dessus de la plateforme, conçu pour prendre des images de la plateforme avec les objets 3D (7) après chargement de la plateforme dans la machine de traitement au laser :
▪ un logiciel de reconnaissance d'image étant configuré pour comparer les positions et les orientations de tous les objets 3D (7) placés sur la plateforme (9) par rapport aux marques de référence avec la CAO de conception de plateforme contenant des informations sur les emplacements et les orientations des objets 3D ;
▪ étant en outre configuré pour utiliser le défaut d'alignement mesuré de chaque objet 3D par rapport à la position et à l'orientation prédéfinies de l'objet 3D sur la plateforme (9) en tant que données de correction destinées à modifier l'orientation et la position CAO de création de motifs par rapport à l'objet 3D pendant le traitement au laser,
• l'unité de commande est configurée automatiquement pour effectuer :
▪ le partitionnement de la surface de l'objet 3D en segments de tessellation à l'aide d'une méthode d'itération mise en oeuvre par ordinateur :
∘ ledit partitionnement étant obtenu sur la base du modèle CAO 3D de l'objet 3D chargé dans l'unité de commande, en calculant les formes et les positions d'une pluralité de segments de tessellation ;
∘ lesdites dimensions maximales de chaque segment de tessellation étant définies par un volume de travail tridimensionnel virtuel limité par le champ de travail fourni par le scanner galvanique à deux miroirs et une plage de travail de l'unité de focalisation dynamique ;
∘ lesdites dimensions maximales de chaque segment de tessellation étant de plus limitées par une fenêtre de paramètres de processus laser comprenant la plage de variations autorisées de la taille et de la densité d'énergie (fluence) du faisceau laser sur la surface de l'objet 3D en raison du décalage de focalisation et de l'angle d'incidence du faisceau, définis expérimentalement et dépendants du type particulier de traitement au laser et du matériau de l'objet 3D ;
∘ lesdites dimensions maximales de chaque segment de tessellation étant réduites de la distance de chevauchement lorsque le traitement au laser particulier nécessite un chevauchement entre les segments de tessellation adjacents pour obtenir un traitement de surface uniforme ou un assemblage sans soudure des segments de traitement au laser ;
∘ ladite itération commençant avec une taille de segment couvrant toute la superficie de l'objet 3D devant être traitée, et ladite taille étant réduite de manière itérative étape par étape en divisant la taille d'une étape d'itération précédente jusqu'à ce que tous les segments de tessellation ne dépassent pas les dimensions maximales mais garantissent que le nombre de segments de tessellation devant être traités par un laser soit minimal ;
▪ la mise en relation des données du fichier CAO de création de motifs avec les segments de tessellation par :
∘ fusion des systèmes de coordonnées des données CAO 3D provenant de l'objet 3D et des fichiers de création de motifs ;
∘ partitionnement des données CAO 3D de création de motifs sur la base de sommets et de bords des segments de tessellation d'objet 3D ajustés à la même zone sur la surface de l'objet 3D ;
▪ la création d'un algorithme de flux de travail sur la façon dont tous les segments de tessellation de l'objet 3D sont traités au laser par une méthode d'itération mise en oeuvre par ordinateur :
∘ tous lesdits segments de tessellation de la surface de l'objet 3D devant être traités au laser étant disposés dans une file d'attente, et ledit temps de repositionnement étant estimé en fonction des paramètres de performance des platines de positionnement, comprenant l'accélération et la vitesse de positionnement ;
∘ ledit temps de repositionnement étant minimisé de manière itérative en donnant la priorité à l'utilisation des platines plus rapides et des distances plus courtes ;
▪ la création d'un algorithme de flux de travail sur la façon dont tous les objets 3D chargés sont traités au laser au cours d'un seul cycle de processus par une méthode d'itération mise en oeuvre par ordinateur :
∘ ladite file d'attente des segments de tessellation devant être traités au laser étant multipliée pour tous les objets 3D sur la plateforme, y compris la position et l'orientation relatives des objets 3D sur la plateforme ;
∘ ladite accessibilité des segments de tessellation devant être traités par le faisceau laser étant vérifiée virtuellement, évitant ainsi l'ombre des objets 3D voisins sur la plateforme lorsque le faisceau laser est incliné pour traiter les parties inclinées de la surface ;
∘ lesdits segments de tessellation devant être traités au laser appartenant à différents objets 3D sur la plateforme mais s'insérant dans le même volume de travail virtuel 3D (limité par le champ de travail fourni par le scanner galvanique à deux miroirs et la plage de travail de l'unité de focalisation dynamique) étant fusionnés ensemble ;
• le faisceau laser focalisé traite tous les segments de tessellation de tous les objets 3D (7) sur la plateforme (9) conformément à la file d'attente des segments de tessellation en fonction du flux de travail simulé par ordinateur, optimisé pour le cycle de processus le plus court :
▪ ledit traitement du motif sur tout segment de tessellation étant effectué à l'aide du déplacement du scanner galvanique et de l'unité de focalisation dynamique, ladite vitesse de balayage du scanner galvanique étant supérieure à celle des platines de positionnement linéaire.

15. Système de traitement par lots d'objets de forme 3D identiques par traitement au laser, selon la revendication 14, **caractérisé en ce que** l'unité de commande est configurée de sorte que la densité d'énergie (fluence) requise à la surface de l'objet 3D (7) devant être traitée soit préservée à l'intérieur de la fenêtre de processus en ajustant l'énergie d'impulsion laser à l'aide d'un atténuateur sur la base d'une modulation acousto-optique ou électro-optique.

16. Système de traitement par lots d'objets de forme 3D identiques par traitement au laser selon la revendication 14, **caractérisé en ce que** l'unité de focalisation dynamique (5) comprend un moyen permettant de changer la position focale le long du sens de propagation du faisceau, sur la base des techniques de lentilles galvanométriques, piézoélectriques ou liquides, la vitesse de changement focal des techniques de lentilles galvanométriques, piézoélectriques ou liquides étant supérieure à celle de la platine de positionnement linéaire.

17. Système de traitement par lots d'objets de forme 3D identiques par traitement au laser, selon la revendication 14, **caractérisé en ce que** l'unité de commande est configurée de sorte qu'au cours du traitement au laser à l'intérieur du volume de travail tridimensionnel virtuel, au moins un axe mécanique linéaire, de préférence Y1, se déplace de manière synchrone à une vitesse constante, en élargissant la fenêtre de travail tridimensionnelle sur la longueur de la platine de positionnement Y1 et en éliminant le temps de repositionnement de la plateforme suivant au moins une direction.
